(19) Europäisches Patentamt
European Patent Office
Office européen des brevets

(11) **EP 1 926 045 A1**

(12) **EUROPEAN PATENT APPLICATION**
published in accordance with Art. 153(4) EPC

(43) Date of publication:
**28.05.2008 Bulletin 2008/22**

(51) Int Cl.:
***G06Q 50/00*** *(2006.01)*    ***G06Q 10/00*** *(2006.01)*

(21) Application number: **06711470.2**

(22) Date of filing: **06.01.2006**

(86) International application number:
**PCT/JP2006/300086**

(87) International publication number:
**WO 2006/073179 (13.07.2006 Gazette 2006/28)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.01.2005 JP 2005002364**

(71) Applicant: **OMRON CORPORATION
Kyoto-shi, Kyoto 600-8530 (JP)**

(72) Inventors:
• **MUKAIGAWA, Shinichi
c/o OMRON Corporation
Shimogyo-ku, Kyoto-shi
Kyoto 600-8530 (JP)**
• **SANO, Kimihiko
c/o OMRON Corporation
Shimogyo-ku, Kyoto-shi
Kyoto 600-8530 (JP)**

(74) Representative: **Vossius & Partner
Siebertstrasse 4
81675 München (DE)**

(54) **SHOP MANAGEMENT SYSTEM, SHOP CONTROL DEVICE, SHOP CONTROL METHOD, MANAGEMENT SERVER, MANAGEMENT METHOD, AND PROGRAM**

(57)     An object of the invention is to efficiently and stably manage machines provided in a store.

A sensor 1 measures environmental information. A management server 11 stores the environmental information in a storage unit not shown. The management server 11 predicts environmental information after a predetermined time from the present time on the environmental information stored in the storage unit, and determines advance control operations for the machines on the basis of the predicted environmental information. The management server 11 generates announce information and machine control information for directly controlling the machine 23 on the basis of the control information for machine as the determination result and transmits them to the store 2. A control unit 22 allows a display unit or a sound output unit (not shown) to announce instruction information for coping with the predicted environmental information to employees of the store 2, and controls the operation of the machine 23 on the basis of the machine control information.

*FIG. 1*

EP 1 926 045 A1

**Description**

Technical Field

The present invention relates to a store management system, a store control device, a store control method, a management server, a management method and a program, and more particularly, to a store management system, a store control device, a store control method, a management server, a management method and a program, capable of efficiently and stably managing machines in a store.

Background Art

A request to manage operations of machines, provided in a national chain store represented by a so-called convenience store and a supermarket, in a lump by a central management center is growing.

When analyzing a breakdown of power consumption of the store such as the above-mentioned convenience store and the supermarket, it can be seen that a respective air-conditioning equipment (a so-called air-conditioning facility, and hereinafter, referred to as air conditioner), an illumination lamp and a refrigerator for storing foods are about one third of the total. Accordingly, the power consumed in the stores considerably changes in accordance with a method of operating the machines, and sales of the stores are greatly affected when the machines break down.

However, since a power rate may be set to charge a contract rate for every upper limit on power consumption, a circuit breaker may be operated to stop the supply of power at the time of exceeding the upper limit. When the supply of power stops, quality of the foods stored in the refrigerator may be lowered greatly. Accordingly, when the power is used, it is necessary not to exceed the upper limit on power consumption set by the contract rate, so as to avoid the stop of the supply of power.

Accordingly, a system for predicting the power consumption of the machines provided in the store in advance and controlling the power consumption amount at the time of exceeding the upper limit on power consumption set by the above-mentioned contract rate has been disclosed (for example, see Patent Document 1).

Patent Document 1: Japanese Patent Unexamined Publication No. 2001-186659

Disclosure of the Invention

Problem that the Invention is to solve

In the above-mentioned method, when power (demanded power) consumed by the machines is predicted and then it is determined that the predicted power exceeds the upper limit on power consumption set by the contract rate, the power consumption is controlled not to exceed the upper limit.

However, since a process for adjusting the power is not efficiently controlled, for example, the set temperature of a refrigerator may increase as needed for the purpose of operating the refrigerator so as not to exceed the upper limit on power consumption. In this case, there is a problem that the foods requiring a management are not assured to be maintained at an appropriate temperature.

The invention is contrived to solve the problem described above, and to efficiently and stably manage machines provided in a store by predicting operation situations of the machines provided in the store and providing an instruction for performing appropriate countermeasures in advance in accordance with the predicted situations.

Means for solving the Problem

A store management system comprising: a store control device for controlling a machine provided in a store; and a management server for managing the machine, wherein the store control device includes: environmental information acquiring means for acquiring environmental information of the store; and first transmission means for transmitting the environmental information to the management server, wherein the management server includes: second reception means for receiving the environmental information transmitted from the store control device; storage means for storing the environmental information; prediction means for predicting the environmental information after a predetermined time on the basis of the environmental information stored in the storage means; machine control information generating means for generating machine control information for controlling the machine on the basis of the environmental information after the predetermined time, which is predicted by the prediction means; and second transmission means for transmitting the machine control information to the store control device, and wherein the store control device further includes: first reception means for receiving the machine control information; and control means for controlling the machine on the basis of the machine control information.

A store control device for controlling a machine prepared in a store, the store control device comprising: environmental information acquiring means for acquiring environmental information of the store; transmission means for transmitting the environmental information to a management server; reception means for receiving machine control information of the machine, generated on the basis of the environmental information after a predetermined time, which is predicted by the management server; and control means for controlling the machine on the basis of the machine control information.

The environmental information includes at least one of the in-store illuminance, the out-store illuminance, the refrigerator temperature, the refrigerator opening and closing frequency, the number of customers, the in-store temperature, the out-store temperature, the in-store humidity, the out-store humidity and the power consumption of the machine.

The machine includes at least one of an illumination lamp, a refrigerator, and an air conditioner.

A store control method of controlling a machine provided in a store, the method comprising the steps of: acquiring environmental information of the store; transmitting the environmental information to a management server; receiving machine control information of the machine, generated on the basis of the environmental information after a predetermined time, which is predicted by the management server; and controlling the machine on the basis of the machine control information.

A program for allowing a computer to execute a process of controlling a store control device for controlling a machine provided in a store, the process comprising the steps of: acquiring environmental information of the store; transmitting the environmental information to a management server; receiving machine control information of the machine, generated on the basis of the environmental information after a predetermined time, which is predicted by the management server; and controlling the machine on the basis of the machine control information.

A management server for managing a machine provided in a store, the management server comprising: reception means for receiving environmental information of the store transmitted from the store; storage means for storing the environmental information; prediction means for predicting the environmental information after a predetermined time on the basis of the environmental information stored in the storage means; machine control information generating means for generating machine control information for controlling the machine on the basis of the environmental information after a predetermined time, which is predicted by the prediction means; and transmission means for transmitting the machine control information to the store.

The environmental information includes at least one of the in-store illuminance, the out-store illuminance, the refrigerator temperature, the refrigerator opening and closing frequency, the number of customers, the in-store temperature, the out-store temperature, the in-store humidity, the out-store humidity and the power consumption of the machine.

The machine includes at least one of an illumination lamp, a refrigerator, and an air conditioner.

The prediction means predicts the out-store illuminance as the environmental information after the predetermined time, on the basis of the out-store illuminance included in the environmental information stored in the storage means, and the machine control information generating means generates the machine control information for controlling the illumination lamp included in the machine, on the basis of the out-store illuminance predicted by the prediction means.

The prediction means predicts the refrigerator temperature as the environmental information after the predetermined time, on the basis of the refrigerator temperature, the number of customers and the refrigerator opening and closing frequency included in the environmental information stored in the storage means, and the machine control information generating means generates the machine control information for controlling the refrigerator included in the machine, on the basis of the refrigerator temperature predicted by the prediction means.

The prediction means predicts the out-store temperature as the environmental information after the predetermined time, on the basis of the out-store temperature included in the environmental information stored in the storage means, and wherein the machine control information generating means generates the machine control information for controlling the air conditioner included in the machine, on the basis of the out-store temperature predicted by the prediction means.

The prediction means predicts an in-store temperature-humidity index and an out-store temperature-humidity index as the environmental information after the predetermined time, on the basis of the in-store temperature, the out-store temperature, the in-store humidity and the out-store humidity included in the environmental information stored in the storage means, and the machine control information generating means generates the machine control information for controlling the air conditioner included in the machine, on the basis of the comparison result between a predetermined threshold value and an absolute value of a difference between the in-store temperature-humidity index and the out-store temperature-humidity index predicted by the prediction means.

A management method of a management server for managing a machine provided in a store, the management method comprising the steps of: receiving environmental information of the store transmitted from the store; storing the environmental information; predicting the environmental information after a predetermined time on the basis of the environmental information stored in the storing step; generating machine control information for controlling the machine on the basis of the environmental information after the predetermined time, which is predicted in the predicting step; and transmitting the machine control information to the store.

A program for allowing a computer to execute a process of controlling a management server for managing a machine provided in a store, the operation comprising the steps of: receiving environmental information of the store transmitted from the store; storing the environmental information; predicting the environmental information after a predetermined time on the basis of the environmental information stored in the storing step; generating machine control information for controlling the machine on the basis of the environmental information after the predetermined time, predicted in the predicting step; and transmitting the machine control information to the store.

In the store management system according to an embodiment of the invention, by the store control device, the environmental information of the store is acquired and transmitted to the management server. By the management server, the store-environmental information transmitted from the store control device is received, the store-environmental information is stored, the store-environmental information after a predetermined time is predicted on the basis of the stored store-environmental information, the machine control information for controlling the machine provided in the store is generated on the basis of the predicted store-environmental information after the predetermined time, and the generated machine control information is transmitted to the machine control apparatus. By the store control device, the machine control information is received and the machine is controlled on the basis of the machine control information.

In the store control device according to an embodiment of the invention, the store-environmental information is acquired, the store-environmental information is transmitted to the management server, the machine control information for the machine provided in the store, generated on the basis of the environmental information after a predetermined time predicted by the management server, is received and the machine is controlled on the basis of the machine control information.

In the management server according to an embodiment of the invention, the store-environmental information transmitted from the store is received, the store-environmental information after a predetermined time is predicted on the basis of the stored store-environmental information, the machine control information for controlling the machine provided in the store is generated on the basis of the predicted store-environmental information after the predetermined time, and the generated machine control information is transmitted to the store.

The environmental information acquiring means for acquiring the store-environmental information of the store control device according to an embodiment of the invention is, for example, an in-store illuminance sensor 39, an out-store illuminance sensor 40, a refrigerator temperature sensor 41, a refrigerator opening and closing sensor 42, a customer counter 43, an in-store temperature sensor 44, an out-store temperature sensor 45, an in-store humidity sensor 46, an out-store humidity sensor 47 and a power consumption measuring unit 48, and measures the in-store illuminance, the out-store illuminance, the refrigerator temperature, the refrigerator opening and closing frequency, the number of customers, the in-store temperature, the out-store temperature, the in-store humidity, the out-store humidity and the power consumption of the illumination lamp, the refrigerator or the air conditioner.

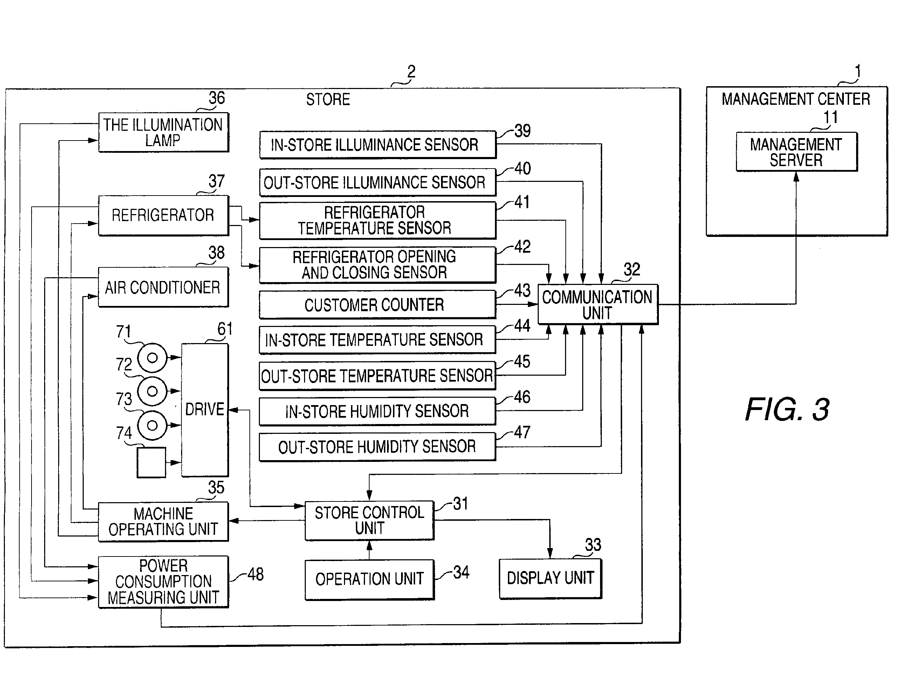

In the store control device according to an embodiment of the invention, the control means for controlling the machine on the basis of the machine control information for the machine provided in the store, generated on the basis of the environmental information after a predetermined time predicted by the management server is, for example, a store control unit 31 of Fig. 3. On the basis of the machine control information supplied from the management server, the control means controls a machine operating unit 35 to control an illumination lamp 36, a refrigerator 37 and an air conditioner 38.

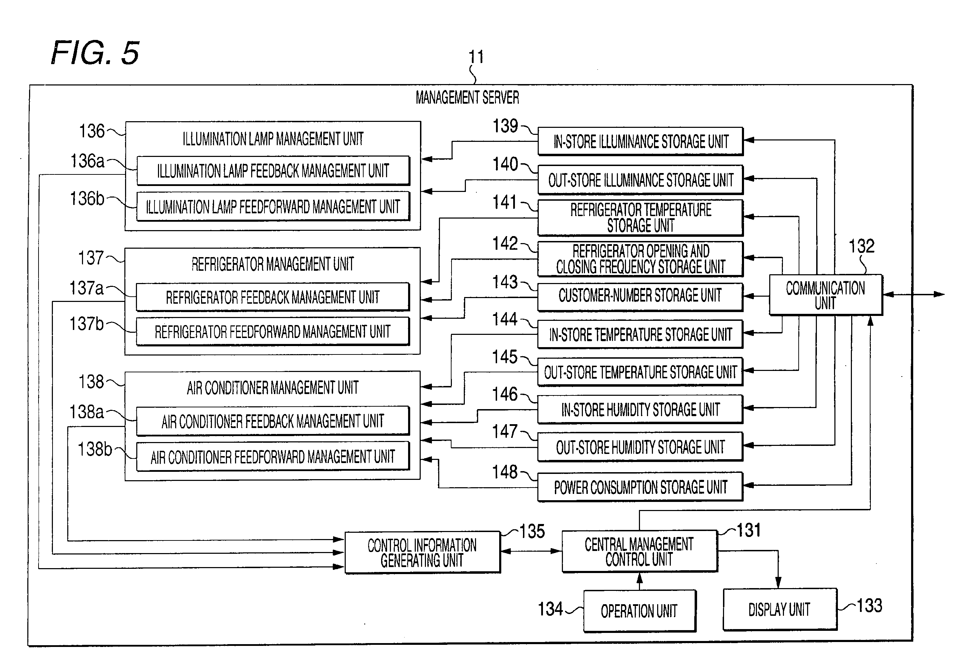

The storage means for storing the store-environmental information of the management server according to an embodiment of the invention is, for example, an in-store illuminance storage unit 139, an out-store illuminance storage unit 140, a refrigerator temperature storage unit 141, a refrigerator opening and closing frequency storage unit 142, a customer-number storage unit 143, an in-store temperature storage unit 144, an out-store temperature storage unit 145, an in-store humidity storage unit 146, an out-store humidity storage unit 147 and a power consumption storage unit 148 of Fig. 5, and stores the in-store illuminance, the out-store illuminance, the refrigerator temperature, the refrigerator opening and closing frequency, the number of customers, the in-store temperature, the out-store temperature, the in-store humidity, the out-store humidity and the power consumption of the illumination lamp, the refrigerator or the air conditioner transmitted from the store 2.

The prediction means for predicting the store-environmental information after a predetermined time on the basis of the store-environmental information stored in the management server according to an embodiment of the invention is, for example, an illumination lamp feedforward management unit 136b, a refrigerator feedforward management unit 137b and an air conditioner feedforward management unit 138b of Fig. 5, and predicts the environmental information for controlling the machine such as the illumination lamp, the refrigerator or the air conditioner on the basis of the information including the in-store illuminance, the out-store illuminance, the refrigerator temperature, the refrigerator opening and closing frequency, the number of customers, the in-store temperature, the out-store temperature, the in-store humidity, the out-store humidity and the power consumption of the illumination lamp, the refrigerator or the air conditioner stored in the in-store illuminance storage unit 139, the out-store illuminance storage unit 140, the refrigerator temperature storage unit 141, the refrigerator opening and closing frequency storage unit 142, the customer-number storage unit 143, the in-store temperature storage unit 144, the out-store temperature storage unit 145, the in-store humidity storage unit 146, the out-store humidity storage unit 147 and the power consumption storage unit 148.

The machine control information generating means for generating the machine control information for controlling the machine provided in the store, on the basis of the predicted store-environmental information after a predetermined time is, for example, a control information generating unit 135 of Fig. 5, and generates the control information for controlling the illumination lamp, the refrigerator or the air conditioner on the basis of the predicted environmental information.

Accordingly, since the control information that copes with the predicted environmental information and is required to control the machine such as the illumination lamp, the refrigerator or the air conditioner provided in a store 2 is generated to control the machine, it is possible to efficiently and stably manage the machine, and as a result, it is possible to lower the power consumption of the store.

Advantage of the Invention

According to an embodiment of the invention, it is possible to efficiently and stably manage machines provided in a store.

Brief Description of the Drawings

Fig. 1 is a diagram for illustrating a configuration of a store management system according to a first embodiment of the invention.
Fig. 2 is a flow chart for explaining a store management process processed by the store management system shown in Fig. 1.
Fig. 3 is a diagram for explaining a detailed configuration of the store shown in Fig. 1.
Fig. 4 is a diagram for explaining a detailed configuration of the management server shown in Fig. 1.
Fig. 5 is a functional block diagram for explaining functions realized by the management server shown in Fig. 1.
Fig. 6 is a flow chart for explaining a store management process processed by the store and management server shown in Figs 3 and 4.
Fig. 7 is a flow chart for explaining an illumination lamp management process on the basis of the feedback control operation shown in Fig. 6.
Fig. 8 is a diagram for explaining an illumination lamp management process on the basis of the feedback control operation shown in Fig. 6.
Fig. 9 is a flow chart for explaining an illumination lamp management process on the basis of the feedforward control operation shown in Fig. 6.
Fig. 10 is a diagram for explaining an illumination lamp management process on the basis of the feedforward control operation shown in Fig. 6.
Fig. 11 is a flow chart for explaining a refrigerator management process on the basis of the feedback control operation shown in Fig. 6.
Fig. 12(a) is a diagram for explaining a refrigerator management process on the basis of the feedback control operation shown in Fig. 6, and Fig. 12(b) is a diagram for explaining a refrigerator management process on the basis of the feedback control operation shown in Fig. 6.
Fig. 13 is a flow chart for explaining a refrigerator management process on the basis of the feedforward control operation shown in Fig. 6.
Fig. 14(a) is a diagram for explaining a refrigerator management process on the basis of the feedforward control operation shown in Fig. 6, and Fig. 14(b) is a diagram for explaining a refrigerator management process on the basis of the feedforward control operation shown in Fig. 6.
Fig. 15 is a flow chart for explaining an air conditioner management process on the basis of the feedback control operation shown in Fig. 6.
Fig. 16(a) is a diagram for explaining an air conditioner management process on the basis of the feedback control operation shown in Fig. 6, and Fig. 16 (b) is a diagram for explaining an air conditioner management process on the basis of the feedback control operation shown in Fig. 6.
Fig. 17 is a flow chart for explaining an air conditioner management process on the basis of the feedforward control operation shown in Fig. 6.
Fig. 18 is a flow chart for explaining another air conditioner management process on the basis of the feedback control operation shown in Fig. 6.
Fig. 19 is a flow chart for explaining another air conditioner management process on the basis of the feedforward control operation shown in Fig. 6.
Fig. 20 (a) is a diagram for explaining another air conditioner management process on the basis of the feedforward control operation shown in Fig. 6. Fig. 20(b) is a diagram for explaining the other air conditioner management process on the basis of the feedforward control operation shown in Fig. 6.

Description of Reference Numerals and Signs

    1: MANAGEMENT CENTER
    2: STORE
    11: MANAGEMENT SERVER
    31: STORE CONTROL UNIT
    32: COMMUNICATION UNIT
    36: ILLUMINATION LAMP
    37: REFRIGERATOR
    38: AIR CONDITIONER
    39: IN-STORE ILLUMINANCE SENSOR
    40: OUT-STORE ILLUMINANCE SENSOR
    41: REFRIGERATOR TEMPERATURE SENSOR
    42: REFRIGERATOR OPENING AND CLOSING SENSOR
    43: CUSTOMER COUNTER
    44: IN-STORE TEMPERATURE SENSOR
    45: OUT-STORE TEMPERATURE SENSOR
    46: IN-STORE HUMIDITY SENSOR
    47: OUT-STORE HUMIDITY SENSOR
    48: POWER CONSUMPTION MEASURING UNIT
    131: CENTRAL MANAGEMENT CONTROL UNIT
    132: COMMUNICATION UNIT
    136: ILLUMINATION LAMP MANAGEMENT UNIT
    136a: ILLUMINATION LAMP FEEDBACK MANAGEMENT UNIT
    136b: ILLUMINATION LAMP FEEDFORWARD MANAGEMENT UNIT
    137: REFRIGERATOR MANAGEMENT UNIT
    137a: REFRIGERATOR FEEDBACK MANAGEMENT UNIT
    137b: REFRIGERATOR FEEDFORWARD MANAGEMENT UNIT
    138: AIR CONDITIONER MANAGEMENT UNIT
    138a: AIR CONDITIONER FEEDBACK MANAGEMENT UNIT
    138b: AIR CONDITIONER FEEDFORWARD MANAGEMENT UNIT
    139: IN-STORE ILLUMINANCE STORAGE UNIT
    140: OUT-STORE ILLUMINANCE STORAGE UNIT
    141: REFRIGERATOR TEMPERATURE STORAGE UNIT
    142 : REFRIGERATOR OPENING AND CLOSING FREQUENCY STORAGE UNIT
    143: CUSTOMER-NUMBER STORAGE UNIT
    144: IN-STORE TEMPERATURE STORAGE UNIT
    145: OUT-STORE TEMPERATURE STORAGE UNIT
    146: IN-STORE HUMIDITY STORAGE UNIT
    147: OUT-STORE HUMIDITY STORAGE UNIT
    148: POWER CONSUMPTION STORAGE UNIT

Best Mode for Carrying Out the Invention

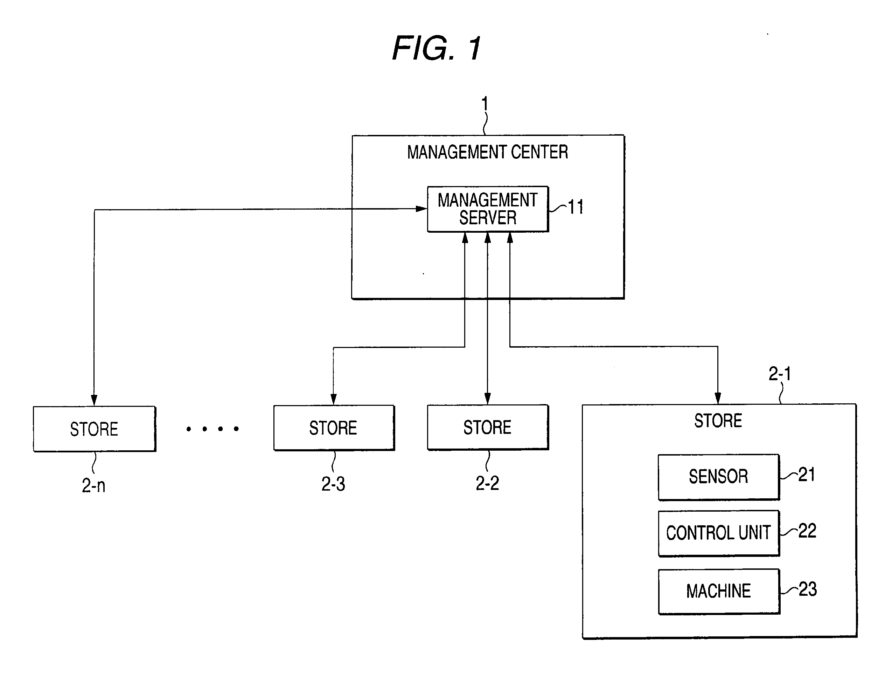

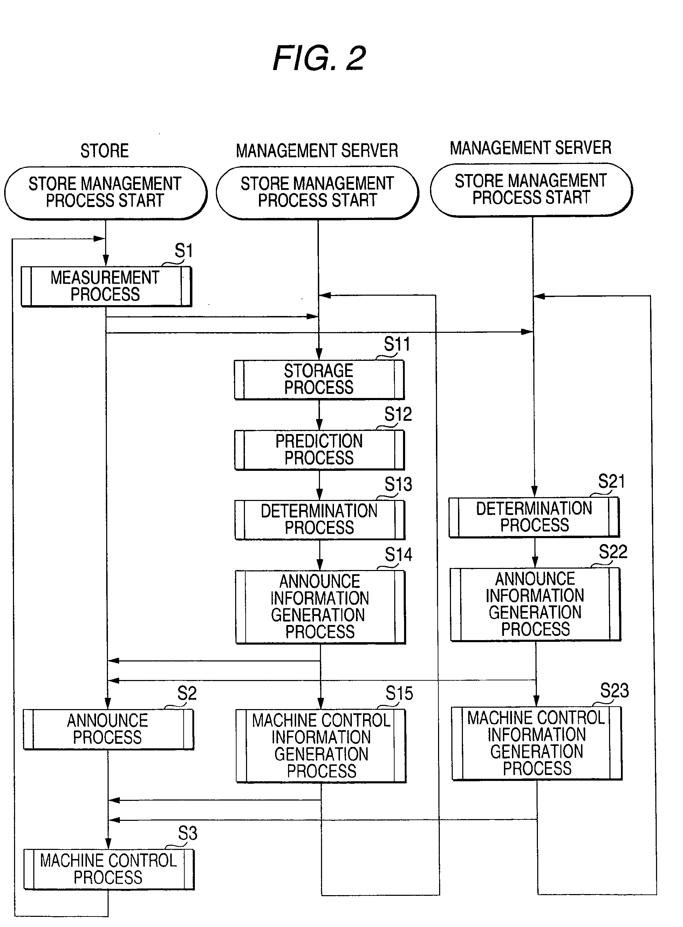

Hereinafter, a store management system according to the invention will be described with reference to drawings. First, the entire outline of the store management system will be described with reference to Figs 1 and 2.
Fig. 1 is a diagram illustrating a configuration of the store management system according to a first embodiment of the invention.
A management center 1 is a service agency managing a plurality of stores 2-1 to 2-n. More specifically, the management center 1 is, for example, a head office of national chain stores and sends various instructions to the stores 2-1 to 2-n.
Hereinafter, in a case where there is no need to particularly distinct the stores 2-1 to 2-n one another, the stores 2-1 to 2-n will be referred to as store 2, and other parts in the system will be called in this manner.
A management server 11 of the management center 1 generates information for controlling machines 23 provided in the stores 2 on the basis of store's environmental information transmitted from sensor 21 of the stores 2 and transmits the control information to the control unit 22 of the stores 2. The control unit 22 of the stores 2 controls operations of the machines 23 on the basis of the control information supplied from the management server 11.

The machine 23 is, for example, an illumination lamp, refrigerator or air conditioner. The term "environmental information" includes the in-store illuminance, the out-store illuminance, the refrigerator temperature, the refrigerator opening and closing frequency, the number of customers, the in-store temperature, the out-store temperature, the in-store humidity, the out-store humidity and the power consumption of the illumination lamp, refrigerator or air conditioner. The management server 11 generates the control information by appropriately using the environmental information on the machine 23.

The control information includes so-called "feedback control information" generating the control information on the basis of the current information and "feedforward control information" generating the control information by predicting the situation after a predetermined time on the basis of the environmental information of the past including the current information. The management server generates all the control information in parallel. Since the process is performed in this manner, it is possible to avoid problems predicted by the feedforward control information in advance. In addition, it is possible to cope with the problems that can not be avoided by the feedforward control information with the feedback control information.

A store management process processed by the store management system including the store 2 and the management server 11 will be described with reference to the flow chart of Fig. 2. The left part in Fig. 2 is the store management process processed by the store 2, the central part in Fig. 2 is the store management process processed by the feedforward control operation performed by the management server 11, and the right part in Fig. 2 is the store management process processed by the feedback control operation performed by the management server 11.

In Step S1, a sensor 1 measures the environmental information, and supplies the measurement result to the management server 11.

In Step 11, the management server 11 stores the environmental information transmitted from the store 2 in its own storage unit not shown in the figure. That is, the environmental information of each store is stored by performing the process.

In Step 12, the management server 11 predicts the environmental information after a predetermined time from the present time on the basis of the environmental information stored in the storage unit. In Step S13, the management server 11 determines the control to be performed in advance for the operations of machines on the basis of the environmental information that is the prediction result.

In Step S14, the management server 11 generates instruction information for controlling the operations of machines as announcement information to be announced to an employee of the store 2 on the basis of the control information of the machines as the determination result and transmits the instruction information to the store 2.

In Step S2, the control unit 22 of the store 2 announces the instruction information for coping with the predicted environmental information to the employee of the store 2 through a display unit or a sound output unit not shown in the figure.

In Step S15, the management server 11 generates machine control information for directly controlling the machines 23 of the store 2 and transmits the machine control information to the store 2.

In Step S3, the control unit 22 controls the operations of machines 23 on the basis of the machine control information transmitted from the management server 11.

Since the above-described process is performed, it is possible to instruct the machines in advance to perform the process coping with the predicted environmental information. For example, as the predicted environmental information, when the refrigerator temperature is predicted to be increased because of the increase of refrigerator door opening and closing frequency by a large amount of customers, the refrigerator is operated at a reduced temperature lower than a normal set temperature in time just before a predetermined time from the time in which the refrigerator temperature and power consumption are increased. As a result, it is possible to maintain the temperature required for maintaining and managing the foods even when the door opening and closing frequency increases and to reduce the power consumption associated with the increased temperature. In addition, only the environmental information is not predicted but information including the environmental information may be predicted. For example, the machines 23 are predicted to be broken down (the machine may not be operated to be cooled to the set temperature in comparison with the power consumption) and then the breakdowns may be announced. The environmental information is not limited thereto described above, and factors affecting the control operations for the machine provided in the store 2 may be added. For example, an event date may be stored and the increase of customers on the event date is forecasted, thus the environmental information may be predicted.

As the feedback process, in Step S21, the management server 11 determines the control operations to be performed to the machines 23 at the present time on the basis of the current environmental information transmitted from the sensor 21 of the store 2.

In Step S22, the management server 11 generates the announce information in accordance with the control operations that are the determination result in Step S21 and transmits the announce information to the store 2. In Step S23, the management server 11 generates the machine control information of each machine 23 on the basis of the control information that is the determination result and transmits the machine control information to the store 2.

Since the above-described process is performed, it is possible to correct the control information of each machine 23 on the basis of the environmental information at that time and cope with the problem against the prediction when the machines 23 can not be controlled in accordance with the prediction predicted by the feedforward control operation on the basis of the above-described feedback control information.

The store management system will be described in detail with reference to Figs 3 to 20.

Fig. 3 is a diagram for illustrating the detailed configuration of the store 2.

A store control unit 31 of the store 2 is a so-called microcomputer including a CPU (Central Processing Unit), ROM (Read Only Memory) and RAM (Random Access Memory), and controls the entire operations in the store 2.

When the store control unit 31 acquires the announce information announcing the control operations, transmitted from the management server 11 via a communication unit 32, of machines provided in the store 2 and then displays the announce information on a display unit 33 (or, announces the announce information by the sound through a speaker not shown in the figure). When an operation unit 34 is operated by the employee of the store, the store control unit 31 generates control signals responding to the operation for the machines (an illumination lamp 36, a refrigerator 37 and an air conditioner 38) and then supplies the control signals to a machine operating unit 35.

The store control unit 31 generates the control signals for the machines (the illumination lamp 36, refrigerator 37 and air conditioner 38) on the basis of the machine control information transmitted from the management server 11 of the management center 1 via a communication unit 32 and then supplies the control signals to the machine operating unit 35. The store control unit 31 displays the in-store illuminance, the out-store illuminance, the refrigerator temperature, the refrigerator opening and closing frequency, the number of customers, the in-store temperature, the out-store temperature, the in-store humidity, the out-store humidity and the power consumptions of the illumination lamp 36, the refrigerator 37 and the air conditioner 38 supplied from the communication unit 32 on the display unit 33, and displays the current operation situations of the machines provided in the store and the situation of the store.

According to the configuration shown in Fig. 3, the store control unit 31 announces the methods of controlling the machines on the basis of the announce information to the display unit 33 and generates the control signals for controlling the machines to be supplied to the machine operating unit 35. However, it is obvious that the store control unit 31 may realize only one of the announcement operation and the generation of control signals for controlling the machines. That is, the store control unit 31 may perform the management to display a recommendation method of managing the machines of store 2 by the announcement or perform the management to operate the machines of the store 2 in a recommendation state without the announcement.

The machine operating unit 35 controls the operations of illumination lamp 36, refrigerator 37 and air conditioner 38 which are machines provided in the store 2 on the basis of the control signals supplied from the store control unit 31.

The illumination lamp 36 illuminates the entire area including a sales floor in the store 2. An example of the illumination lamp 36 includes a Hf inverter (high-frequency lighting inverter) type illumination lamp. The Hf inverter type illumination lamp changes the illuminance in the range of the minimum illuminance (L-min) to the maximum illuminance (L-max) on the basis of the control signals supplied from the machine operating unit 35, and changes the power consumption in accordance with the illuminance. The illumination lamp 36 may be configured to include a fluorescent lamp with constant illuminance in addition to the above-described Hf inverter type illumination lamp. In this case, it is premised that the illuminance and power consumption can be adjusted by, for example, lighting a part of the fluorescent lamps in order to adjust the illuminance.

The refrigerator 37 includes a refrigerator for display and a refrigerator for storage provided in the sales floor in the store 2, and is operated so as to maintain a predetermined set temperature on the basis of the control signal supplied from the machine operating unit 35.

The air conditioner 38 is an air-conditioning facility provided in the sales floor in the store 2, and is operated so as to maintain a predetermined set temperature on the basis of the control signal supplied from the machine operating unit 35.

An in-store illuminance sensor 39 and an out-store illuminance sensor 40 measure the in-store and out-store (around the store 2) illuminances in the store 2 respectively and supply the information including the measured in-store and out-store illuminances to the communication unit 32. A refrigerator temperature sensor 41 measures the temperature in the refrigerator 37 as the refrigerator temperature, and supplies the measured refrigerator temperature to the communication unit 32. A refrigerator opening and closing sensor 42 measures the door opening and closing frequency of the refrigerator 37, and supplies the measured opening and closing frequency of the refrigerator with the openable and closable door to the communication unit 32. A customer counter 43 counts the number of customers entering or going out of the store 2 through an entrance gate or an exit gate thereof, and supplies the counted number of customers as the number of customers to the communication unit 32. An in-store temperature sensor 44 and out-store temperature sensor 45 measure the in-store and out-store (around the store 2) temperatures respectively and supply the measurement result to the communication unit 32. An in-store humidity sensor 46 and an out-store humidity sensor 47 measure the in-store and out-store humidities respectively and supply the measurement results to the communication unit 32. A power consumption measuring unit 48 measures the power consumptions of the illumination lamp 36, refrigerator 37 and air conditioner 38, and supplies the measurement results to the communication unit 32.

The communication unit 32 transmits, to the management server 11 of the management center 1, the information including the in-store illuminance, the out-store illuminance, the refrigerator temperature, the refrigerator opening and closing frequency, the number of customers, the in-store temperature, the out-store temperature, the in-store humidity, the out-store humidity and the power consumptions of the illumination lamp 36, refrigerator 37 and air conditioner 38 supplied from the in-store illuminance sensor 39, the out-store illuminance sensor 40, the refrigerator temperature sensor 41, the refrigerator opening and closing sensor 42, the customer counter 43, the in-store temperature sensor 44, the out-store temperature sensor 45, the in-store humidity sensor 46, the out-store humidity sensor 47 and the power consumption measuring unit 48, and supplies the information to the store control unit 31. The communication unit 32 receives the machine control signals and announces information transmitted from the management server 11 and then supplies them to the store control unit 31.

A drive 61 drives a magnetic disk 71, an optical disk 72, an optical magnetic disk 73 or a semiconductor memory 74 inserted thereinto and acquires a program or data recorded in the magnetic disk 71, optical disk 72, optical magnetic disk 73 or a semiconductor memory 74. The store control unit 31 transmits the acquired program or data to a storage unit not shown in the figure as needed, and then stores or executes them.

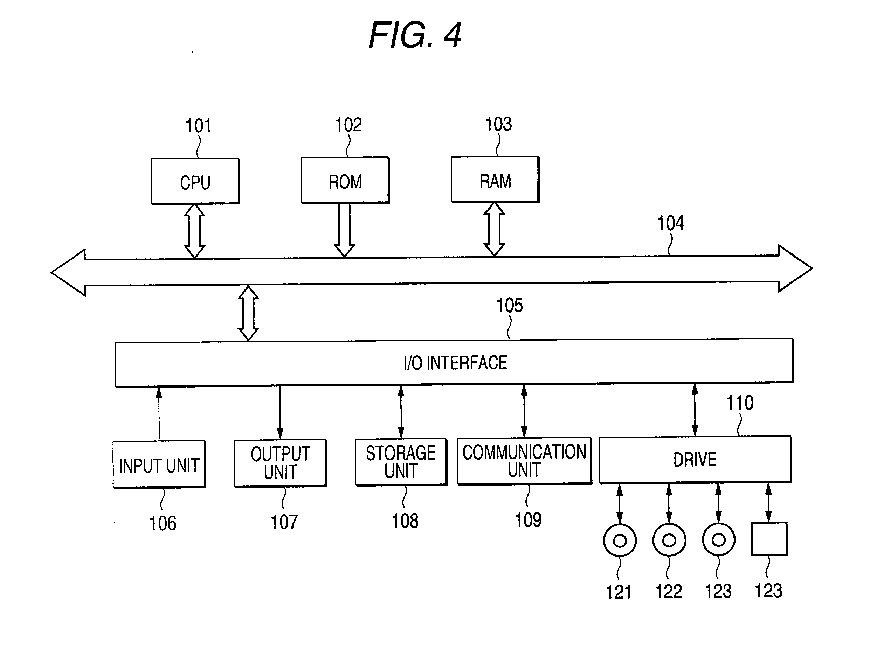

Hereinafter, the configuration of management server 11 will be described with reference to Fig. 4.

A CPU (Central Processing Unit) 101 executes various processes in accordance with a program stored in a ROM (Read Only Memory) 102 or a storage unit 108. The data or the program to be performed by the CPU 101 is appropriately stored in a RAM (Random Access Memory) 103. The CPU 101, ROM 102 and RAM 103 are connected to one another via a bus 104.

I/O interface 105 is connected to the CPU 101 via the bus 104. The I/O interface 105 is connected to an input unit 106 having a keyboard, a mouse or the like and an output unit 107 having a speaker, a display or the like. The CPU 101 executes a predetermined process on the basis of the information from the input unit 106 and outputs an image or a sound via the output unit 107 as the process result.

The storage unit 108 connected to the I/O interface 105 is configured with, for example, a hard disk and the like and stores the various data and the program to be executed by the CPU 101. A communication unit 109 receives the information including the in-store illuminance, the out-store illuminance, the refrigerator temperature, the refrigerator opening and closing frequency, the number of customers, the in-store temperature, the out-store temperature, the in-store humidity, the out-store humidity and the power consumptions of the illumination lamp 36, the refrigerator 37 and the air conditioner 38 transmitted from the store 2, and transmits the machine control information for the illumination lamp, the refrigerator and the air conditioner in the store 2.

In addition, the storage unit 108 stores the various programs, and the CPU 101 reads out the programs and then executes the processes corresponding to the programs. The programs stored in the storage unit 108 are not limited to the above-described programs, and may be programs acquired via the communication unit 109.

The drive 110 connected to the I/O interface 105 drives a magnetic disk 121, an optical disk 122, an optical magnetic disk 123 or a semiconductor memory 124 inserted thereinto and acquires a program or data recorded in the magnetic disk 121, optical disk 122, optical magnetic disk 123 or a semiconductor memory 124. The acquired program or data is transmitted to the storage unit 108 as needed and then stored therein.

Hereinafter, the functions realized by the management sever 11 will be described with reference to Fig. 5.

A central management control unit 131 controls the entire operations of the management server 11. A communication unit 132 is controlled to transmit the machine control information supplied from the control information generating unit 135 to the store 2. When an operation unit 134 is operated, the central management control unit 131 executes various processes on the basis of the operation signals in accordance with the operation, and displays the result of the executed processes or the required information on a display unit 133.

When the communication unit 132 acquires the information including the in-store illuminance, the out-store illuminance, the refrigerator temperature, the refrigerator opening and closing frequency, the number of customers, the in-store temperature, the out-store temperature, the in-store humidity, the out-store humidity and the power consumptions of the illumination lamp 36, the refrigerator 37 and the air conditioner 38 transmitted from the store 2, the communication unit 132 supplies and stores the information to an in-store illuminance storage unit 139, an out-store illuminance storage unit 140, a refrigerator temperature storage unit 141, a refrigerator opening and closing frequency storage unit 142, a customer-number storage unit 143, an in-store temperature storage unit 144, an out-store temperature storage unit 145, an in-store humidity storage unit 146, an out-store humidity storage unit 147 and a power consumption storage unit 148 for each information.

An illumination lamp management unit 136 generates the information for controlling the illumination lamp 36 in the store 2 on the basis of the information including the in-store and out-store illuminances stored in the in-store illuminance storage unit 139 and the out-store illuminance storage unit 140, and supplies the generated information to the control information generating unit 135. More specifically, an illumination lamp feedback management unit 136a generates instruction information for controlling the illumination lamp 36 in accordance with the feedback control operation, on the basis of the information including the most recent in-store and out-store illuminances stored in the in-store illuminance storage unit 139 and the out-store illuminance storage unit 140, and supplies the instruction information to the control information generating unit 135. An illumination lamp feedforward management unit 136b predicts the out-store illuminance after a predetermined time from the present time (for example, after 30 minutes) on the basis of the information including the in-store and out-store illuminances stored in the in-store illuminance storage unit 139 and the out-store illuminance storage unit 140. In response to the prediction result, the illumination lamp feedforward management unit 136b generates instruction information for controlling the illumination lamp 36 in accordance with the feedforward control operation, and supplies the instruction information to the control information generating unit 135.

A refrigerator management unit 137 generates the information for controlling the refrigerator 37 in the store 2 on the basis of the information including the refrigerator temperature, the refrigerator opening and closing frequency and the number of customers stored in the refrigerator temperature storage unit 141, the refrigerator opening and closing frequency storage unit 142, and the customer-number storage unit 143, and supplies the generated information to the control information generating unit 135. More specifically, a refrigerator feedback management unit 137a generates instruction information for controlling the refrigerator 37 in accordance with the feedback control operation, on the basis of the information including the refrigerator temperature, the refrigerator opening and closing frequency and the number of customers stored in the refrigerator temperature storage unit 141, the refrigerator opening and closing frequency storage unit 142, and the customer-number storage unit 143, and supplies the instruction information to the control information generating unit 135. A refrigerator feedforward management unit 137b predicts the refrigerator temperature after a predetermined time (for example, after 30 minutes) on the basis of the information including the refrigerator temperature, the refrigerator opening and closing frequency and the number of customers stored in the refrigerator temperature storage unit 141, the refrigerator opening and closing frequency storage unit 142, and the customer-number storage unit 143. In response to the prediction result, the refrigerator feedforward management unit 137b generates instruction information for controlling the refrigerator 37 in accordance with the feedforward control operation, and supplies the instruction information to the control information generating unit 135.

An air conditioner management unit 138 generates the information for controlling the air conditioner 38 in the store 2 on the basis of the information including the power consumption of the air conditioner stored in the power consumption storage unit 148 or on the basis of the information including the in-store temperature, the out-store temperature, the in-store humidity and the out-store humidity stored in the in-store temperature storage unit 144, the out-store temperature storage unit 145, the in-store humidity storage unit 146 and the out-store humidity storage unit 147, and supplies the generated information to the control information generating unit 135. More specifically, an air conditioner feedback management unit 138a generates information for controlling the air conditioner 38 in accordance with the feedback control operation on the basis of the information including the most recent power consumption of the air conditioner stored in the power consumption storage unit 148 or on the basis of the information including the in-store temperature, the out-store temperature, the in-store humidity and the out-store humidity stored in the in-store temperature storage unit 144, the out-store temperature storage unit 145, the in-stare humidity storage unit 146 and the out-store humidity storage unit 147, and supplies the information for controlling the air conditioner 38 to the control information generating unit 135.

An air conditioner feedforward management unit 138b predicts the power condumption of the air conditioner 38 or an absolute value of a difference between the in-store temperature-humidity index and the out-store temperature-humidity index after a predetermined time (for example, after 30 minutes) on the basis of the information including the power consumption of the air conditioner stored in the power condumption storage unit 148 or on the basis of the information including the in-store temperature, the out-store temperature, the in-store humidity and the out-store humidity stored in the in-store temperature storage unit 144, the out-store temperature storage unit 145, the in-store humidity storage unit 146 and the out-store humidity storage unit 147. In response to the prediction result, the air conditioner feedforward management unit 138b generates information for controlling the air conditioner 38 in accordance with the feedforward control operation, and supplies the information to the control information generating unit 135. In the following description, it is premised that the air conditioner feedforward management unit 138b has a function to predict the power condumption of the air conditioner 38 after a predetermined time (for example, after 30 minutes) on the basis of the information including the in-store temperature, the out-store temperature, the in-store humidity and the out-store humidity and generate the information for controlling the air conditioner 38 and a function to predict the absolute value of the difference between the in-store temperature-humidity index and the out-store temperature-humidity index and generate the information for controlling the air conditioner 38 on the basis of the feedforward control operation responding to the prediction result and the functions are shifted optionally.

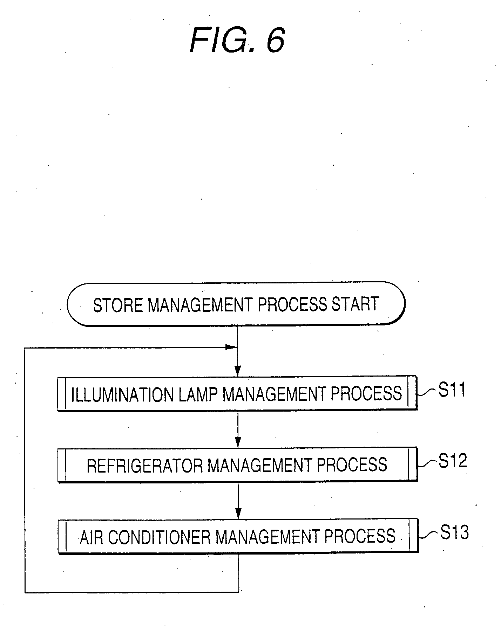

Hereinafter, the store management process of the management system including the management center 1 and the store 2 of Figs. 3 to 5 will be described with reference to a flow chart of Fig. 6.

The illumination lamp management process is executed in Step S11, the refrigerator management process is performed in Step S12, the air conditioner management process is performed in Step S13, and then Step S11 is performed again to repeat the process.

That is, the illumination lamp management process, refrigerator management process and air conditioner management process are sequentially executed, and the process is repeated. The process order in Fig. 6 is one example. The illumination lamp management process, refrigerator management process and air conditioner management process may be performed in an order different from the example, or may be performed independently. In a case where there are machines other than the illumination lamp, refrigerator and air conditioner in the store 2, the management process of the machines may be added to the order of the management processes of the illumination lamp, the refrigerator and the air conditioner as needed, and may be performed independently.

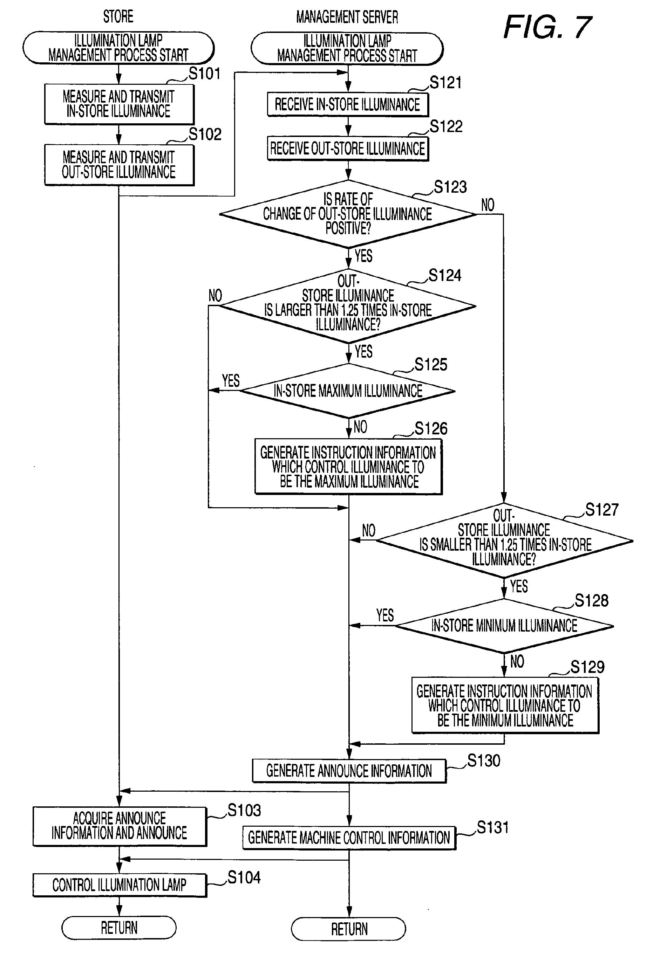

Hereinafter, the illumination lamp management process in Step S11 shown in Fig. 6 will be described with reference to Figs. 7 to 10. First, the illumination lamp management process processed by the feedback control operation will be described with reference to a flow chart of Fig. 7.

In Step S101, the in-store illuminance sensor 39 measures the in-store illuminance, and supplies the measured in-store illuminance to the communication unit 32. The communication unit 32 transmits the in-store illuminance information supplied from the in-store illuminance sensor 39 to the management center 1.

In Step S102, the out-store illuminance sensor 39 measures the out-store illuminance, and supplies the measured cut-store illuminance to the communication unit 32. The communication unit 32 transmits the out-store illuminance information supplied from the out-store illuminance sensor 39 to the management center 1. The in-store illuminance information and the cut-store illuminance information may be transmitted to the management center 1 separately or simultaneously together.

In Step S121, the communication unit 132 receives the in-store illuminance information transmitted from the store 2, and supplies the received in-store illuminance information to the in-store illuminance storage unit 139.

In Step S122, the communication unit 132 receives the cut-store illuminance information transmitted from the store 2, and supplies the received out-store illuminance information to the out-store illuminance storage unit 140.

In step S123, The illumination lamp feedback management unit 136a of the illumination lamp management unit 136 sends an inquiry to the out-store illuminance storing unit 140 and then determines whether the rate of change of out-store illuminance (the time-differentiation of the out-store illuminance) is positive on the basis of the stored out-store illuminance information. That is, since the out-store illuminance changes to be increased (the rate of change is positive) in the morning and to be decreased (the rate of change is negative) in the evening generally, the illumination lamp feedback management unit 136a determines whether the present time is in the time as the morning time in which the out-store illuminance increases from the present time. Also, since the determination process of Step S123 is process determining whether the present time is in the morning or in the evening, the determination process may be performed by conditions other than the stored out-store illuminance information. For example, time information may be used to perform the determination process.

When it is determined that the rate of change of out-store illuminance is positive, that is, the present time is in the morning in which the out-store illuminance increases from the present time in Step S123, the illumination lamp feedback management unit 136a determines whether the out-store illuminance is greater than 1.25 times in-store illuminance in Step S124. Since the process in Step S124 is a process for determining whether the value of out-store illuminance is greater than the value of in-store illuminance, the value of out-store illuminance may be a value other than the value that is 1.25 times of the value of in-store illuminance. For example, the value of out-store illuminance may be a value of the in-store illuminance + $\alpha$ ($\alpha$: illuminance).

When the illumination lamp feedback management unit 136a determines whether the illuminance of the illumination lamp 36 (the in-store illuminance at the present time) is the maximum illuminance at the present time and then the illuminance of the illumination lamp 36 is determined to be not the maximum illuminance but the minimum illuminance in Step S125, the instruction information, which controls the illuminance of illumination lamp 36 to be the maximum illuminance, is supplied to the control information generating unit 135 in Step S126.

In Step S130, the control information generating unit. 135 generates the announce information operating the illumination lamp 36 at the maximum illuminance, and supplies the generated information to the central management control unit 131. The central management control unit 131 controls the communication unit 132 to transmit the supplied announce information to the store 2.

In Step S103, the store control unit 31 of the store 2 acquires the transmitted announce information via the communication unit 32, and displays the announce information on the display unit 33. In this case, the announcement urging the employee to operate the illumination lamp 36 at the maximum illuminance is displayed on the display unit 33.

In Step S131, the control information generating unit 135 generates the machine control information for operating the illumination lamp 36 at the maximum illuminance, and supplies the generated information to the central management control unit 131. The central management control unit 131 controls the communication unit 132 to transmit the supplied machine control information for the illumination lamp 36 to the store 2.

In Step S104, the store control unit 31 acquires the transmitted machine control information via the communication unit 32, and supplies the acquired information to the machine operating unit 35. The machine operating unit 35 operates the illumination lamp 36 on the basis of the supplied the machine control information so that the illuminance of illumination lamp 36 becomes the maximum illuminance.

When the difference between the in-store illuminance and the out-store illuminance is greater than a predetermined range, the customers feel darkness in the store at the time of entering the store from the outside, thereby feeling uncomfortably. Accordingly, the customers' buying motive shows a tendency to decrease. Therefore, there is a need to adjust the difference between the in-store illuminance and the out-store illuminance to be in a predetermined range so as not to feel the darkness at the time of entering the store from the outside. In this example, when the out-store illuminance is equal to or greater than 1.25 times in-store illuminance, the illuminance of the illumination lamp 36 is controlled to be the maximum illuminance and the in-store illuminance increases. Accordingly, the difference between the in-store illuminance and the cut-store illuminance is controlled to be reduced.

When it is determined that the rate of change of cut-store illuminance is not positive, that is, the present time is in the evening in which the out-store illuminance is reduced from the present time in Step S123, the illumination lamp feedback management unit 136a determines whether the out-store illuminance is smaller than 1.25 times in-store illuminance in Step S127.

For example, when it is determined that the out-store illuminance is smaller than 1.25 times in-store illuminance in Step S127, the illumination lamp feedback management unit 136a determines whether the illuminance of illumination lamp 36 is set to the minimum illuminance in Step S128. For example, when it is determined that the illuminance of illumination lamp 36 is not set to the minimum illuminance in Step S128, the illumination lamp feedback management unit 136a. supplies the instruction information to the control information generating unit 135. Accordingly, the illumination lamp 36 is controlled, thus the illuminance thereof is set to the minimum illuminance.

In this case, in Step S130, the control information generating unit 135 generates the announce information operating the illumination lamp 36 at the minimum illuminance, and supplies the generated information to the central management control unit 131. The central management control unit 131 controls the communication unit 132 to transmit the supplied announce information to the store 2.

In addition, in step S103, the store control unit 31 of the store 2 allows the display unit. 33 to display the announcement urging the employee to operate the illumination lamp 36 at the minimum illuminance.

In Step S131, the control information generating unit 135 generates the machine control information for operating the illumination lamp 36 at the minimum illuminance, and supplies the generated information to the central management control unit 131. The central management control unit 131 controls the communication unit 132 to transmit the supplied machine control information for the illumination lamp 36 to the store 2.

In Step S104, the store control unit 31 acquires the transmitted machine control information via the communication unit 32, and supplies the acquired machine control information to the machine operating unit 35. The machine operating unit 35 operates the illumination lamp 36 on the basis of the supplied machine control information so that the illuminance of the illumination lamp 36 is set to the minimum illuminance.

That is, when the out-store illuminance is lowered in the evening and the difference between the in-store illuminance and the out-store illuminance becomes greater than a predetermined range, the customers do not feel the darkness at the time of entering the store from the outside, even when the illuminance of illumination lamps in the store is lowered. Accordingly, when the out-store illuminance is smaller than 1.25 times in-store illuminance, the illuminance of the illumination lamp 36 is controlled to be the minimum illuminance in order to lower the in-store illuminance. Therefore, the difference between the in-store illuminance and the cut-store illuminance is controlled to be reduced.

In Step S124, when it is determined that the cut-store illuminance is not greater than 1.25 times in-store illuminance, the process in Steps S125 and S126 is skipped. In Step S125, when it is determined, that the in-store illuminance is the maximum illuminance, the process of Step S126 is skipped. In Step S127, when it is determined that the out-store illuminance is not smaller than 1.25 times in-store illuminance, the process in Steps S128 and 3129 is skipped. In Step S128, when it is determined that the in-store illuminance is the minimum illuminance, the process of Step 3129 is skipped.

In this case, in Steps S103 and S131, since the machine control information and the announce information maintaining the operation for controlling the illumination lamp 36 are generated, the process in steps S103 and 3104 may substantially is skipped.

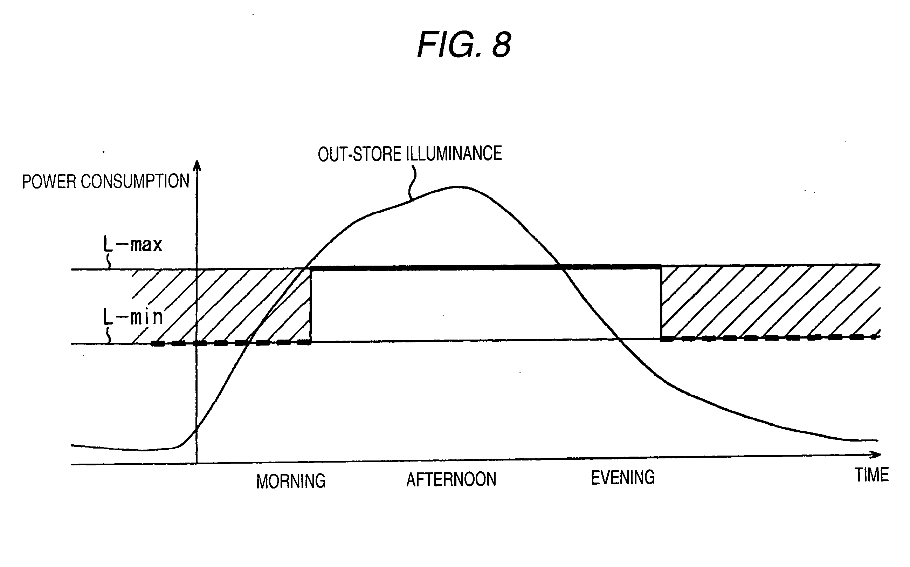

As a result, as shown in Fig. 8, since the in-store illuminance increases as the out-store illuminance increased in the morning and the in-store illuminance is reduced as the out-store illuminance reduced at the approach of evening, the customers do not feel the darkness at the time of entering the store from the outside, and there is no need to unnecessarily increase the in-store illuminance in the evening. Accordingly, the customers' buying motive does not show a tendency to decrease, and it is possible to reduce the power consumption of illumination lamp 36. In Fig. 8, the horizontal axis indicates time, the vertical axis indicates the power consumption, the thick solid line indicates the maximum illuminance (L-max), the thick dotted line indicates the minimum illuminance (L-min), and the thin solid line indicates the out-store illuminance. The shaded portion shown in Fig. 8 indicates the time zone in which the power consumption can be reduced.

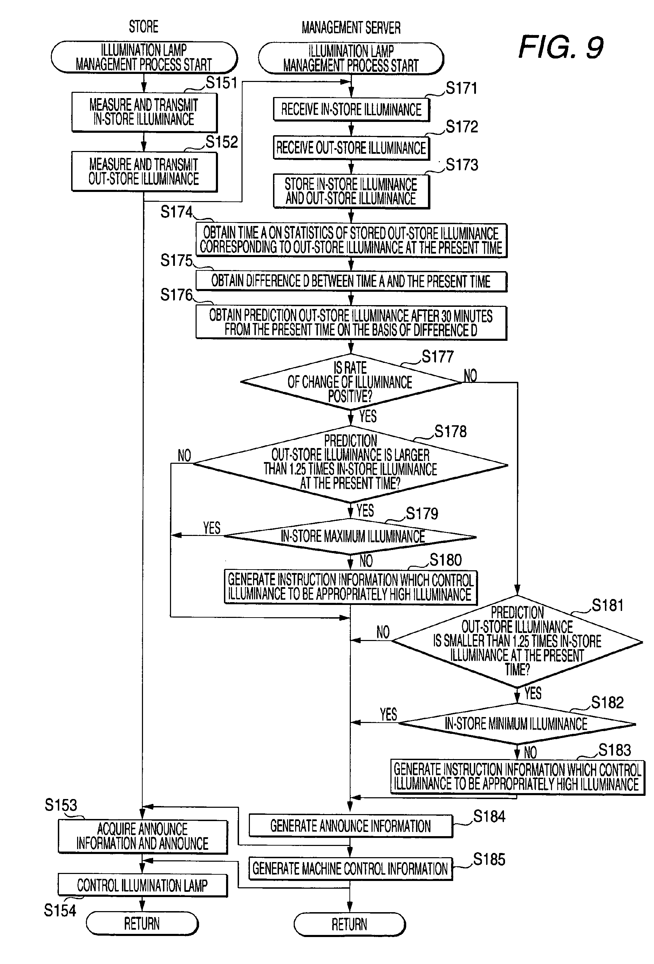

Hereinafter, the illumination lamp management process performed by the feedforward process will be described with reference to the flow chart ot Fig. 9. Since the process in Steps S151, S152, S171. and S172 are the same as the process in Steps S101, S102, S121 and S122 of Fig. 7, the description thereof will be omitted.

In Step S173, the in-store illuminance storage unit 139 and the cut-store illuminance storage unit 140 respectively store the supplied in-store and out-store illuminance information.

In step S174, the illumination lamp feedforward management unit 136b sends an inquiry to the in-store illuminance storing unit 139, and obtains as Time A the time of the illuminance on the statistics corresponding to the out-store illuminance at the present time on the basis of the statistics of an average illuminance at the same times of the past days and average out-store illuminance at the same times of the same days of the past years.

In Step S175, the illumination lamp feedforward management unit 136b obtains Difference D between the Time A and the present time.

In Step S176, the illumination lamp feedforward management unit 136b obtains prediction out-store illuminance after 30 minutes from the present time on the basis of the Difference D. The Difference D is a time correction value. Accordingly, for example, when the Time A on the statistics is earlier than the actual time by 5 minutes, that is, the Difference D is +5 minutes, the out-store illuminance after 30 minutes from the time A (the statistical out-store illuminance after 35 minutes from the present time) is obtained as the prediction out-store illuminance after 30 minutes from the present time.

In Step S177, the illumination lamp feedforward management unit 136b of the illumination lamp management unit 136 sends an inquiry to the out-store illuminance storage unit 140, and then determines whether the rate of change of prediction out-store illuminance to the current out-store illuminance is positive on the basis of the stored out-store illuminance information.

In step S177, when it is determined that the rate of change of prediction out-store illuminance to the current out-store illuminance is positive, that is, the present time is in the morning in which the out-store illuminance increases from the present time in Step S177, the illumination lamp feedback management unit 136a determines whether the prediction out-store illuminance is greater than 1.25 times current in-store illuminance in Step S178.

When the illumination lamp feedforward management unit 136b determines whether the illuminance of illumination lamp 36 at the present time is the maximum illuminance, and determines that the illuminance of illumination lamp 36 is not the maximum illuminance in Step S179, the instruction information for controlling the illuminance of the illumination lamp 36 to be the appropriately high illuminance is supplied to the control information generating unit 135 in Step S180.

In Step S181, the control information generating unit 135 generates the announce information operating the illumination lamp 36 so as to appropriately increase the illuminance of the illumination lamp 36, and supplies the generated announce information to the central management control unit 131. The central management control unit 131 controls the communication unit 132 to transmit the supplied announce information to the store 2.

In Step S184, the store control unit 31 of the store 2 acquires the transmitted announce information via the communication unit 32, and displays the announce information on the display unit 33. In this case, the announcement urging the employee to operate the illumination lamp 36 so as to appropriately increase the illuminance of the illumination lamp 36 is displayed on the display unit 33.

In Step S185, the control information generating unit 135 generates the machine control information for operating the illumination lamp 36 so as to appropriately increase the illuminance of the illumination lamp 36, and supplies the generated information to the central management control unit 131. The central management control unit 131 controls the communication unit 132 to transmit the supplied machine control information for the illumination lamp 36 to the store 2.

In Step S154, the store control unit 31 acquires the transmitted machine control information via the communication unit 32, and supplies the acquired information to the machine operating unit 35. The machine operating unit 35 operates the illumination lamp 36 on the basis of the supplied machine control information so that the illuminance of the illumination lamp 36 is appropriately increased.

In this example, when it is predicted that the out-store illuminance becomes equal to or greater than 1.25 times in-store illuminance after 30 minutes, the illuminance of the illumination lamp 35 is controlled to be the appropriately high illuminance and the in-store illuminance is gradually increased in advance to response to the change of out-store illuminance. Accordingly, the unnecessary increase of in-store illuminance is reduced while reducing the difference between the in-store illuminance and the out-store illuminance. As a result, since it is possible to appropriately change the in-store illuminance prior to the change of out-store illuminance, the illumination lamp management process performed by the feedforward control operation responds to the out-store illuminance change more quickly than the illumination lamp management process performed by the feedback control operation. As a result, it is possible to appropriately maintain the in-store illuminance as well as to suppress the unnecessary increase of the in-store illuminance.

In Step S177, when it is determined that the rate of change of prediction out-store illuminance to the current out-store illuminance is not positive, that is, the present time is in the evening in which the out-store illuminance is reduced in Step S177, the illumination lamp feedforward management unit 136b determines whether the prediction out-store illuminance is smaller than 1.25 times current in-store illuminance in Step S181.

For example, when it is determined that the prediction out-store illuminance is smaller than 1.25 times current in-store illuminance in step S181, the illumination lamp feedforward management unit 136b determines whether the illumination lamp 36 (the in-store illuminance) is set to the minimum illuminance, and determines that the illuminance of illumination lamp 36 is not set to the minimum illuminance in Step S182, the illumination lamp feedforward management unit 136b supplies the information for controlling the illuminance of the illumination lamp 36 to be the appropriately low illuminance to the control information generating unit 135 in Step S183.

In this case, in Step S184, the control information generating unit 135 generates the announce information operating the illumination lamp 36 so as to appropriately reduce the illuminance of the illumination lamp 36, and supplies the generated information to the central management control unit 131. The central management control unit 131 controls the communication unit 132 to transmit the supplied announce information to the store 2.

In Step S153, the store control unit 31 of the store 2 allows the display unit 33 to display the announcement urging the employee to appropriately lower the illuminance of the illumination lamp 36.

In step S185, the control information generating unit 135 generates the machine control information for operating the illumination lamp 36 so as to appropriately reduce the illuminance of the illumination lamp 36, and supplies the generated machine control information to the central management control unit 131. The central management control unit 131 controls the communication unit 132 to transmit the supplied machine control information for the illumination lamp 36 to the store 2.

In Step S154, the store control unit 31 acquires the transmitted machine control information via the communication unit 32, and supplies the acquired information to the machine operating unit 35. The machine operating unit 35 operates the illumination lamp 36 on the basis of the supplied machine control information so that the illuminance of illumination lamp 36 is appropriately reduced.

That is, when the out-store illuminance is lowered in the evening and the difference between the in-store illuminance and the out-store illuminance becomes greater than a predetermined range, the customers do not feel the darkness at the time of entering the store from the outside, even when the illuminance of illumination lamps in the store is lowered. Accordingly, when the prediction out-store illuminance after 30 minutes from the present time is smaller than 1.25 times current in-store illuminance, the illuminance of illumination lamp 36 is controlled to be the appropriately low and the in-store illuminance is gradually lowered. Therefore, it is possible to maintain the needed in-store illuminance while maintaining the difference between the in-store illuminance and the out-store illuminance.

In Step S178, when it is determined that the prediction out-store illuminance is not greater than 1.25 times current in-store illuminance, the process in Steps S179 and S180 is skipped. In Step S179, when the illuminance of illumination lamp 36 (the in-store illuminance) is already the maximum illuminance, the process in step S180 is skipped. In Step S181, when it is determined that the prediction out-store illuminance is not smaller than 1.25 times current in-store illuminance, the process in Steps S182 and S183 is skipped. In Step S182, when the illuminance of illumination lamp 36 (the in-store illuminance) is already the minimum illuminance, the process in Step S182 and S193 is skipped.

In this case, in Steps S184 and S185, since the machine control information and the announce information maintaining the operation for controlling the illumination lamp 36 are generated, the process in Steps S103 and S104 may substantially is skipped.

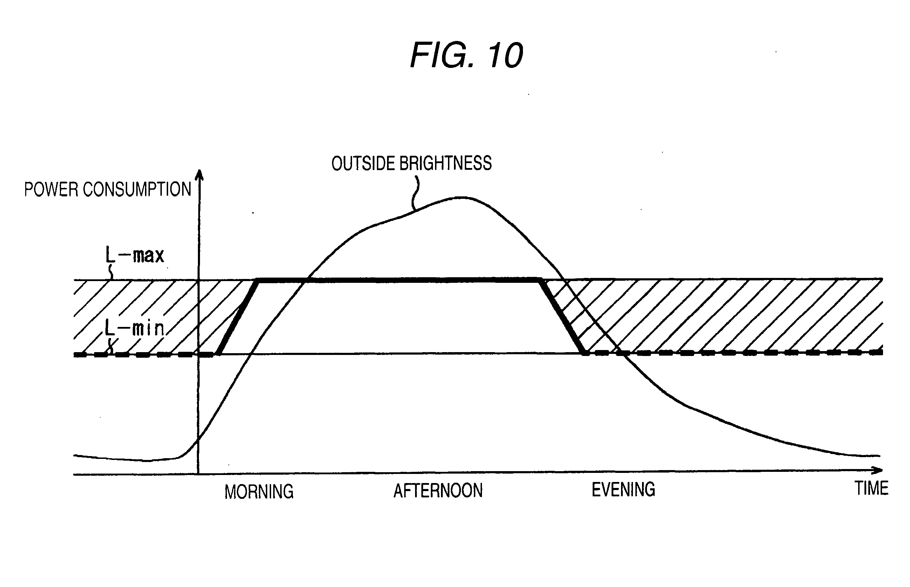

Since the process is performed, the in-store illuminance is gradually increased just before the increase of the out-store illuminance in the morning and the in-store illuminance is gradually reduced just before the reduction of the out-store illuminance at the approach of evening as shown in Fig. 10. Accordingly, the customers do not feel the darkness at the time of entering the store from the outside and there is no need to unnecessarily increase the in-store illuminance in the evening.

Since the in-store illuminance changes by predicting the cut-store illuminance, it is possible to maintain the appropriate in-store illuminance always. Accordingly, the customers do not feel the darkness at the time of entering the store from the outside and it is possible to reduce the power consumption of the illumination lamp 36.

In Fig. 10, the horizontal axis indicates time, the vertical axis indicates the power consumption, the thick solid line indicates the maximum illuminance (L-max), the thick dotted line indicates the minimum illuminance (L-min), and the thin solid line indicates the out-store illuminance. The shaded portion shown in Fig. 10 indicates the time zone in which the power consumption can be reduced.

As described above with reference to Fig. 2, any one of the above-described feedback control operation and the feedforward control operation is executed. Accordingly, when the in-store illuminance information and the out-store illuminance information are not stored and accurate prediction out-store illuminance is not obtained, the illumination lamp management process performed by the feedback control operation becomes the dominant control operation. However, when the in-store illuminance information and the out-store illuminance information are stored and the accurate prediction out-store illuminance is obtained, the illumination management process performed by the feedforward control operation becomes the dominant control operation. In a case where the actual out-store illuminance is different from the statistics in accordance with the changes such as climate, the illumination lamp management process performed by the feedback control operation becomes the dominant control operation. As is evident from the comparison Fig. 8 with Fig. 10, the feedforward control operation maintains the in-store illuminance more appropriately than the feedback control operation and can reduce the power consumption efficiently. Accordingly, as the in-store illuminance and the out-store illuminance are stored, the prediction, out-store illuminance can be obtained more accurately, and as the feedforward control operation becomes the dominant control operation, the power consumption of the illumination lamp 36 can be reduced.

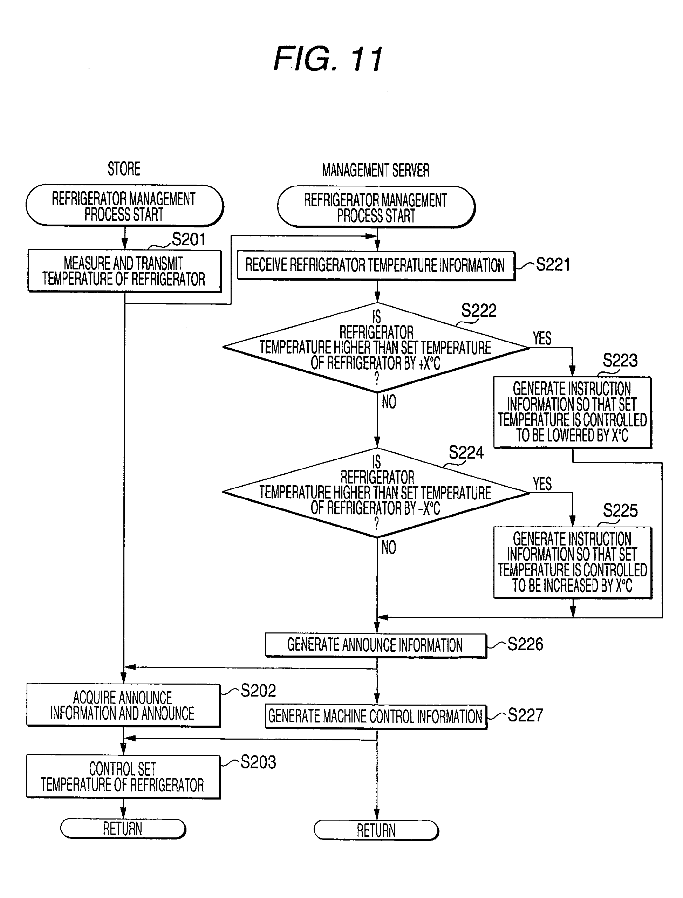

Hereinafter, the above-mentioned refrigerator management process in Step S12 of Fig. 6 will be described with reference to Figs 11 to 14. First, the refrigerator management process performed by the feedback control operation will be described with reference to the flow chart of Fig. 11.

In Step S201, the refrigerator temperature sensor 41 measures the temperature of the refrigerator 37 (the refrigerator temperature), and supplies the measured temperature to the communication unit 32. The communication unit 32 transmits the refrigerator temperature information supplied from the refrigerator temperature sensor 41 to the management center 1.

In Step S221, the communication unit 132 receives the refrigerator temperature information transmitted from the store 2, and supplies the received refrigerator temperature information to the refrigerator temperature storage unit 141.

In Step S222, the refrigerator feedback management unit 137a of the refrigerator management unit 137 sends an inquiry to the refrigerator temperature storage unit 141 and determines whether the refrigerator temperature is higher than the set refrigerator temperature + X°C on the basis of the most recent refrigerator temperature information.

When it is determined that the refrigerator temperature is higher than the set refrigerator temperature + X°C in Step S222, the refrigerator feedback management unit 137a supplies the instruction information to the control information generating unit 135 in step S223 so that the set refrigerator temperature is controlled to be lowered by X°C.

In Step S226, the control information generating unit 135 generates the announce information controlling the set temperature of the refrigerator 37 so as to be lowered by X°G, and supplies the generated announce information to the central management control unit 131. The central management control unit 131 controls the communication unit 132 to transmit the supplied announce information to the store 2.

In Step S202, the store control unit 31 of the store 2 acquires the transmitted announce information via the communication unit 32, and displays the announce information on the display unit 33. In this case, the announcement urging the employee to lower the set temperature of the refrigerator 37 by X°C is displayed on the display unit 33.

In Step S227, the control information generating unit 135 generates the machine control information for operating the refrigerator 37 so as to lower the set temperature of the refrigerator 37 by X°C, and supplies the generated machine control information to the central management control unit 131. The central management control unit 131 controls the communication unit 132 to transmit the supplied machine control information for the refrigerator 37 to the store 2.

In Step S203, the store control unit 31 acquires the transmitted machine control information via the communication unit 32, and supplies the acquired information to the machine operating unit 35. The machine operating unit 35 operates the refrigerator 37 on the basis of the supplied machine control information so that the set temperature of the refrigerator 37 is lowered by X°C.

In Step S222, when it is determined that the refrigerator temperature is not higher than the set temperature + X°C, the refrigerator feedback management unit 137a determines whether the refrigerator temperature is lower than the set temperature + X°C in Step S224.

For example, in Step S224, when it is determined that the refrigerator temperature is lower than the set temperature - X°C, the refrigerator feedback management unit 137a supplies the instruction information, for controlling the set temperature of the refrigerator 37 to be increased by X°C to the control information generating unit 135.

In this case, in Step S226, the control information generating unit 135 generates the announce information operating the refrigerator 37 so as to increase the set temperature of the refrigerator 37 by X°C, and supplies the generated information to the central management control unit 131. The central management control unit 131 controls the communication unit 132 to transmit the supplied announce information to the store 2.

In step S202, the store control unit 31 of the store 2 allows the display unit 33 to display the announcement urging the employee to increase the set temperature of the refrigerator 37 by X°C on.

In step S227, the control information generating unit 135 generates the machine control information for operating the refrigerator 37 so as to increase the set temperature of the refrigerator 37 by X°C, and supplies the generated information to the central management control unit 131. The central management control unit 131 control the communication unit 132 to transmit the supplied machine control information increasing the set temperature of the refrigerator 37 by X°C to the store 2.

In Step S203, the store control unit 31 acquires the transmitted machine control information via the communication unit 32, and supplies the acquired information to the machine operating unit 35. The machine operating unit 35 operates the refrigerator 37 so as to increase the set temperature of the refrigerator 37 by X°C.

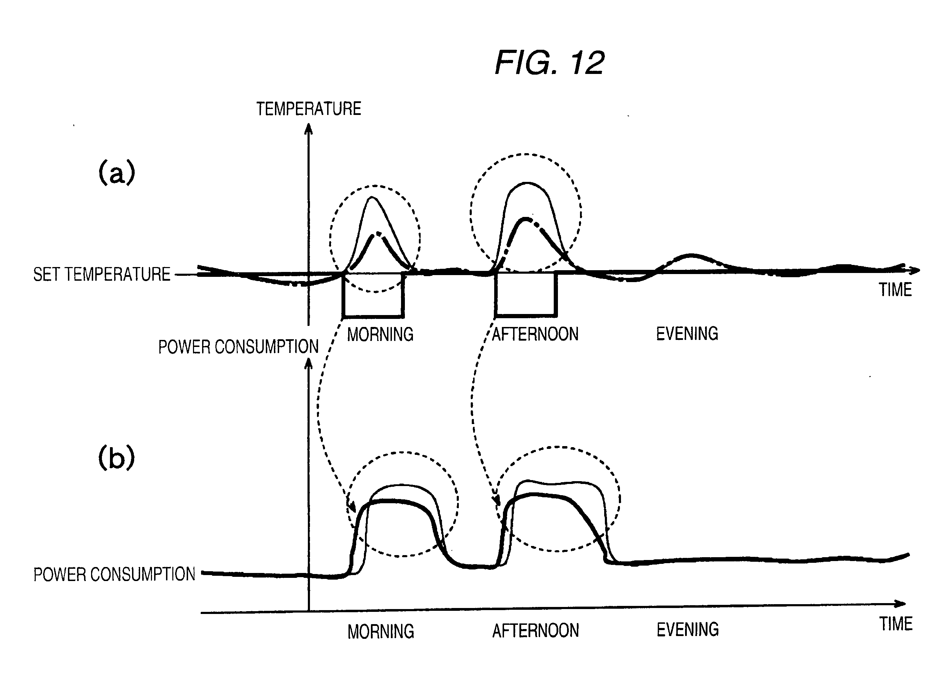

That is, when the refrigerator 37 is not managed by the above-mentioned feedback control operation, the refrigerator temperature changes as shown by the thin solid line at the time of setting the set temperature to zero in the y direction in Fig. 12(a). That is, since the door opening and closing frequency increases in the daytime in which many customers enter the store, the refrigerator temperature increases. As a result, as shown by the thin solid line in Fig. 12 (b), since the power consumption reaches a peak in a position deviated from a peak of the refrigerator temperature and the refrigerator temperature increases, the refrigerator 37 is operated in a state in which the operation efficiency of a compressor of the refrigerator 37 is poor. Accordingly, the power consumption increases. However, in the feedback control operaton, when the refrigerator temperature is higher than the set temperature by X°C, in accordance with the change of the refrigerator temperature shown by the dotted and dashed line in Fig- 12(a), the set temperature is reduced as shown in the thick solid line, and thus it is possible to change the refrigerator temperature in accordance with the lowered set temperature. Accordingly, the poor operation efficiency of the compressor of the refrigerator 37 can be suppressed, and as a result, the highest point of the power consumption can rapidly follow the refrigerator temperature as shown by the thick solid line in Fig. 12(b) and it is possible to lower the power consumption.

When the refrigerator temperature is not higher than the set temperature + X°C in Step S222, and when the refrigerator temperature is not lower than the set temperature - X°C in Step S224, the process in Steps S223 and S225 is skipped. In this case, since the machine control information and the announce information maintaining the operation of the refrigerator 37 are generated in Steps S226 and S227, the process in Steps S202 and S203 may be skipped substantially.

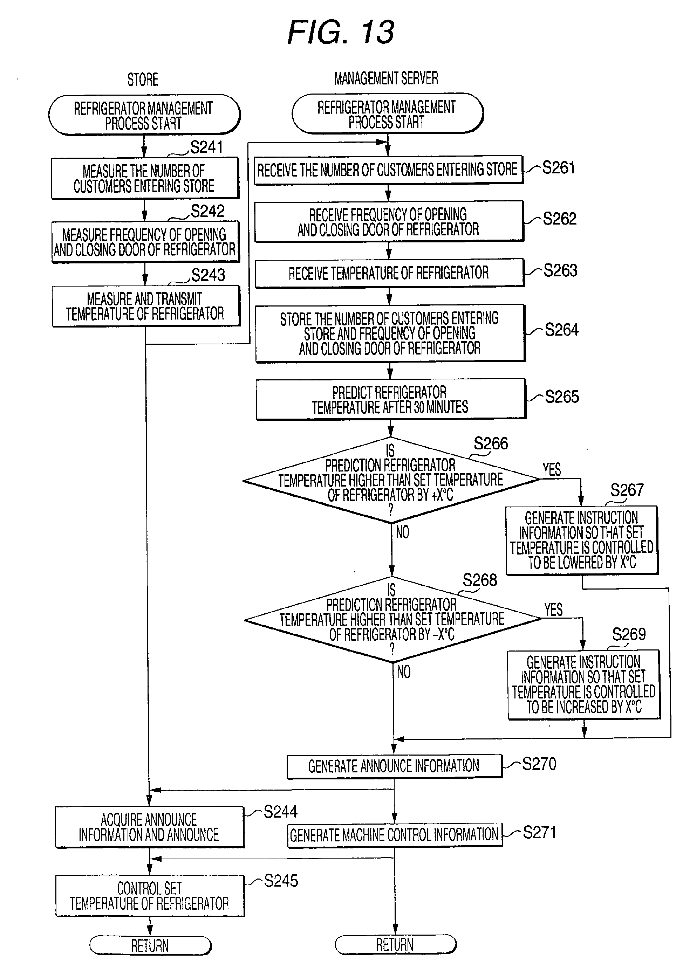

Next, the refrigerator management process by the feedforward control operation will be described with reference to a flow chart of Fig. 13.

In Step S241, the customer counter 43 measures the number of the customers entering the store, and supplies the measured number of the customers to the communication uni 32. The communication unit 32 transmits the customer-number information supplied from the customer counter 43 to the management center 1.

In Step S242, the refrigerator opening and closing sensor 42 measures the frequency of opening and closing the door of the refrigerator 37, and supplies the measured frequency to the communication unit 32. The communication unit 32 transmits the door opening and closing frequency information of the refrigerator 37 supplied from the refrigerator opening and closing sensor 42 to the management center 1.

In Step S243, the refrigerator temperature sensor 41 measures the temperature in the refrigerator 37 (refrigerator temperature), and supplies the measured temperature to the communication unit 32. The communication unit 32 transmits the refrigerator temperature information supplied from the refrigerator temperature sensor 41 to the management center 1. The information including the number of customers, the refrigerator opening and closing frequency and the refrigerator temperature may be transmitted to the management center 1 respectively or simultaneously.

In Step S261, the communication unit 132 receives the customer-number information transmitted from the store 2, and supplies the received information to the customer-number storage unit 143.

In Step S262, the communication unit 132 receives the door opening and closing frequency information of the refrigerator 37 transmitted from the store 2, and supplies the received information to the refrigerator opening and closing frequency storage unit 142.

In step S263, the communication unit 132 receives the refrigerator temperature information transmitted from the store 2, and supplies the received information to the refrigerator temperature storage unit 141.

In Step S264, the customer-number storage unit 143 stores the customer-number information transmitted from the store 2, the refrigerator opening and closing frequency storage unit 142 stores the door opning and closing frequency information of the refrigerator 37 transmitted from the store 2, and the refrigerator temperature storage unit 141 stores the refrigerator temperature information transmitted from the store 2.

In Step S265, the refrigerator feedforward management unit 137b of the refrigerator management unit 137 sends an inquiry to the refrigerator temperature storage unit 141, the refrigerator opening and closing frequency storage unit 142 and the customer-number storage unit 143 to acquire the prediction refrigerator temperature after 30 minutes in accordance with the following equation (1), on the basis of the accumulated information including the refrigerator temperature, the refrigerator opening and closing frequency and the number of customers.

$$\text{Prediction Refrigerator Temperature} =$$

$$T \times (1 + \alpha(1 - C/100) + \beta(1 - D/100)) \quad \ldots(1)$$

In this equation, T is an average value of the refrigerator temperature after 30 minutes from the present time in the past days, stored in the refrigerator temperature storage unit 141, C is a ratio (%) of the present number of customers to the past average number of customers, D is a ratio (%) of the present refrigerator opening and closing frequency to the past average opening and closing frequency stored in the refrigerator opening and closing frequency storage unit 142, and $\alpha$ and $\beta$ are weighting coefficients ($0<\alpha<1$, $0<\beta<1$) to the number of customers and the refrigerator opening and closing frequency, respectively. That is, the prediction refrigerator temperature is a refrigerator temperature corrected by the present number of customers and the present refrigerator opening and closing frequency, with respect to the past average refrigerator temperature after 30 minutes from the present time in the past days.

In Step S266, the refrigerator feedforward management unit 137b determines whether the prediction refrigerator temperature after 30 minutes is higher than the set temperature of the refrigerator by X°C.

For example, when it is determined that the prediction refrigerator temperature is higher than the set temperature by X°C in Step S266, the refrigerator feedforward management unit 137b supplies the information for lowering the set temperature of the refrigerator by X°C to the control information generating unit 135 in step S267.

In Step S270, the control information generating unit 135 generates the announce information lowering the set temperature of the refrigerator 37 by X°C, and supplies the generated information to the central management control unit 131. The central management control unit 131 controls the communication unit 132 to transmit the supplied announce information to the store 2.

In Step S244, the store control unit 31 of the store 2 acquires the transmitted announce information via the communication unit 32, and displays the announce information on the display unit 33. In this case, the announcement urging the employee to lower the set temperature of the refrigerator 37 by X°C is displayed on the display unit 33.

In Step S271, the control information generating unit 135 generates the machine control information for operating the refrigerator 37 so as to lower the set temperature of the refrigerator 37 by X°C, and supplies the generated information to the central management control unit 131. The central management control unit 131 controls the communication unit 132 to transmit the supplied machine control information for the refrigerator 37 to the store 2.

In Step S245, the store control unit 31 acquires the transmitted machine control information via the communication unit 32, and supplies the acquired information to the machine operating unit 35. The machine operating unit 35 operates the refrigerator on the basis of the supplied machine control information so that the set temperature of the refrigerator 37 is lowered by X°C.

When it is determined that the refrigerator temperature is not higher than the set temperature by X°C in Step S266, the refrigerator feedforward management unit 137b determines whether the refrigerator temperature is lower than the set temperature - X°C in Step S268.

For example, when it is determined that the refrigerator temperature is lower than the set temperature - X°C in Step S268, the refrigerator feedforward management unit 137b supplies the information for increasing the set temperature of the refrigerator 37 by X°C to the control information generating unit 135 in Step S269.

In this case, in Step S270, the control information generating unit 135 generates the announce information operating the refrigerator 37 so as to increase the set temperature of the refrigerator 37 by X°C, and supplies the generated information to the central management control unit 131. The central management control unit 131 controls the communication unit 132 to transmit the supplied announce information to the store 2.

In Step S244, the store control unit 31 of the store 2 allows the display unit 33 to display the announcement urging the employee to increase the set temperature of the refrigerator 37 by X°C.

In addition, in Step S271, the control information generating unit 135 generates the machine control information for operating the refrigerator 37 so as to increase the set temperature of the refrigerator 37 by X°C, and supplies the generated information to the central management control unit 131. The central management control unit 131 controls the communication unit 132 to transmit the supplied machine control information increasing the set temperature of the refrigerator 37 by X°C to the store 2.

In Step S245, the store control unit 31 acquires the transmitted machine control information via the communication unit 32, and supplies the acquired information to the machine operating unit 35. The machine operating unit 35 operates the refrigerator 37 on the basis of the supplied machine control information so that the set temperature of the refrigerator 37 increases by X°C.

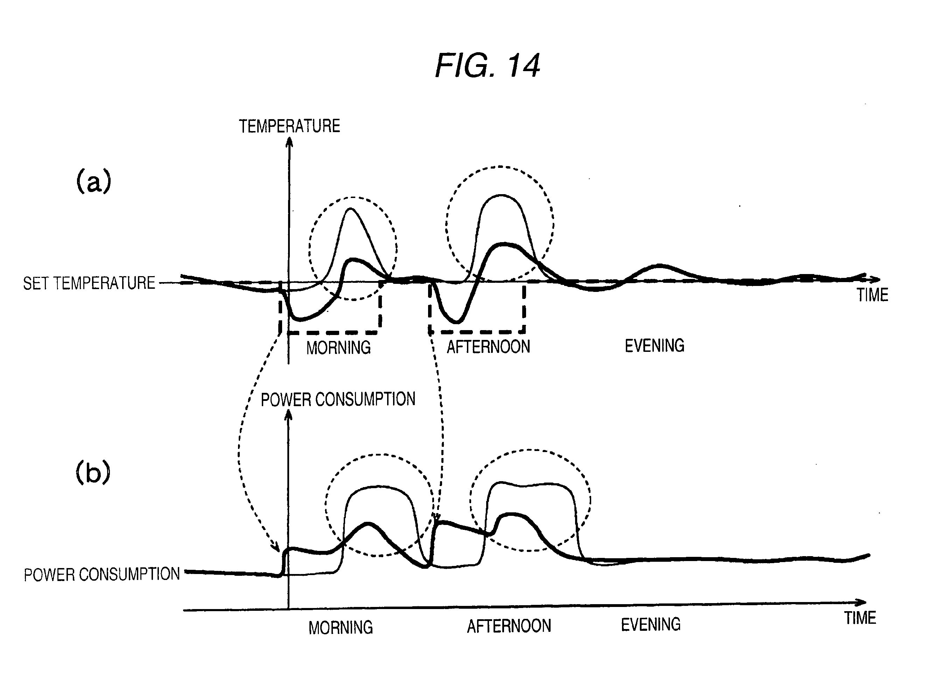

That is, in the feedforward control operation, when it is predicted that the refrigerator temperature as the prediction refrigerator temperature after 30 minutes shown by the thin solid line of Fig. 14 (a) is higher than the set temperature by X°C, the refrigerator temperature is lowered rapidly by lowering the set temperature in time earlier by 30 minutes as shown by the thick dotted line. Accordingly, it is possible to maintain a state in which the refrigerator temperature is close to the set temperature even when the door of the refrigerator 37 is frequently opened and closed by the customers, and it is possible to suppress the decrease in the operating efficiency of the compressor of the refrigerator 37 by lowering the set temperature in advance. As a result, it is possible to lower the highest point of the power consumption, as shown by the tick solid line of Fig. 14(b), and thus it is possible to lower the power consumption totally.

When the refrigerator temperature is not higher than the set temperature + X°C in Step S266, and when the refrigerator temperature is not lower than the set temperature - X°C in Step 5268, the process in Steps S267 and S269.

In this case, since the machine control information and the announce information maintaining the operation of the refrigerator 37 are generated in Steps S270 and S271, the process in Steps S244 and S245 may be skipped substantially.

That is, in this example, when it is predicted that the refrigerator temperature after 30 minutes is higher than the set temperature by X°C, the set temperature is lowered by X°C to operate the refrigerator (the portion in which the refrigerator temperature shown by the thick solid line in Fig. 14(a) is convex downward). Accordingly, it is possible to maintain a state in which the refrigerator temperature is close to the set temperature even when the temperature increases by opening and closing the door (the dotted line-surrounded portion in which the refrigerator temperature shown by the thick solid line in Fig. 14(a) is convex upward).

Further, in the refrigerator 37, excessive loads are applied to the compressor when the difference between the refrigerator temperature and the set temperature increases too much, thus high operation efficiency that becomes a design point can not be maintained. Accordingly, by lowering the set temperature to lower the refrigerator temperature to a level in which the operation efficiency is not extremely lowered and operating the refrigerator, before the difference between the refrigerator temperature and the set temperature increases, it is possible to suppress the reduction in operation efficiency of (the compressor) of the refrigerator 37. As a result, it is possible to lower the power consumption totally as shown in Fig. 14(b) (as compared with the conventional power consumption of the thin solid line in Fig. 14(b), the power consumption in accordance with the feedforward control operation, shown by the thick solid line, is low.).

As in the case of the illumination lamp management process, any one of the above-mentioned feedback control opration and the feedforward control operation is executed as described with reference to Fig. 2. Accordingly, in a state that the information including the refrigerator temprature, the number of customers and the refrigerator opening and closing frequency is not stored and the prediction refrigerator temperature is not acquired accurately, the refrigerator management process in accordance with the feedback control operation becomes dominant. However, when accurate prediction, refrigerator temperature is obtained by storing the information including the refrigerator temprature, the number of customers and the refrigerator opening and closing frequency, the refrigerator management process in accordance with the feedforward control operation becomes dominant. In addition, when the actual number of customers and the refrigerator opening and closing frequency are changed by the changes such as weather and then become values away from the statistical data, the refrigerator management process in accordance with the feedback control operation becomes dominant.

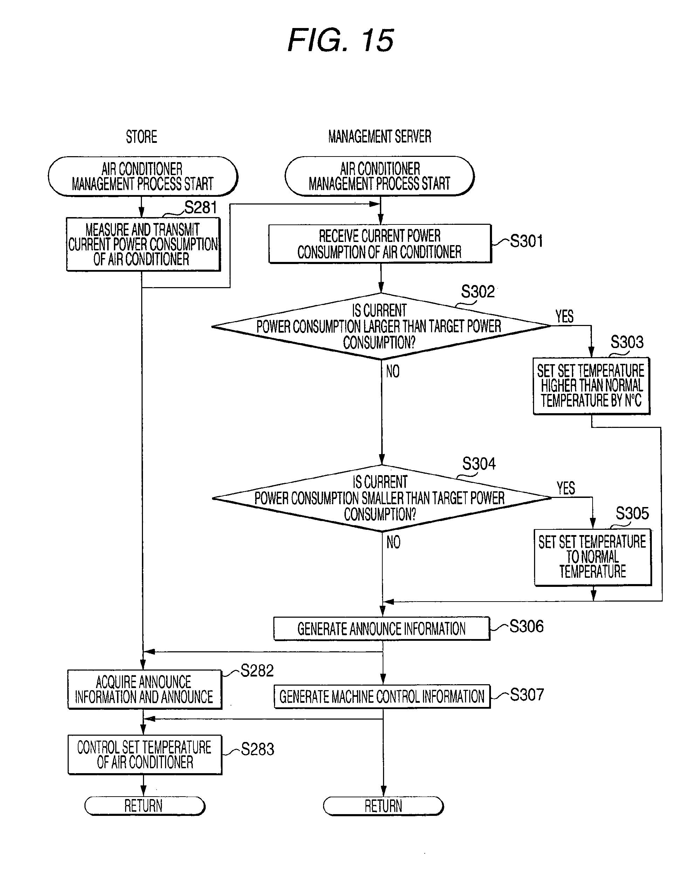

The above-mentioned air conditioner management process in Step S13 of Fig. 6 will be described with reference to Figs. 15 to 20. The air conditioner management process will be described on the basis of a method of managing the operation in accordance with the power consumption and a method of managing the operation in accordance with the absolute value of the difference between the in-store temperature-humidity index and the out-store temperature-humidity index. First, a method of managing the operation of the air conditioner 38 on the basis of the power consumption will be described with reference to Figs. 15 to 17.

The air conditioner management process on the basis of the feedback control operation in accordance with the power consumption will be described with reference to a flow chart of Fig. 15.

In step S281, the power consumption measuring unit 48 measures the current power consumption, of the air conditioner 38, and supplies the measured power consumption to the communication unit 32. The communication unit 32 transmits the power consumption information of the air conditioner 38 supplied from the power consumption measuring unit 48 to the management center 1.

In Step S301, the communication unit 132 receives the power consumption information cf the air conditioner 38 transmitted from the store 2, and supplies the received information to the power consumption storage unit 148.

In Step S302, the air conditioner feedback management unit 138a of the air conditioner management unit 138 sends an inquiry to the power consumption storage unit 148, and determines whether the power consumption of the air conditioner 38 is larger than target power consumption.

When it is determined that the most recent power consumption of the air conditioner 38 is larger than the target power consumption in step S302, the air conditioner feedback management unit 138a supplies the information for increasing the set temperature of the air conditioner 38 by N°C to the control information generating unit 135 in step S303.

In step S306, the control information, generating unit 135 generates the announce information increasing the set temperature of the air conditioner 38 by N°C, and supplies the generated information to the central management control unit 131. The central management control unit 131 controls the communication unit 132 to transmit the supplied announce information to the store 2.

In Step S282, the store control unit 31 of the store 2 acquires the transmitted announce information via the communication unit 32, and displays the announce informatin on the display unit 33. In this case, the announcement urging the employee to increase the set temperature of the air conditioner 38 by N°C is displayed on the display unit 33.

In Step S307, the control information generating unit 135 generates the machine control information for operating the air conditioner 38 so as to increase the set temperature of the air conditioner 38 by N°C, and supplies the generated informatin to the central management control unit 131. The central management control unit 131 controls the communication unit 132 to transmit the supplied machine control information for the air conditioner 38 to the store 2.

In Step S283, the store control unit 31 acquires the transmitted machine control information via the communication unit 32, and supplies the acquired informatin to the machine operating unit 35. The machine operating unit 35 operates the air conditioner 38 on the basis of the supplied machine control information so that the set temperature of the air conditioner 38 increases by N°C.

When it is determined that the current power consumption of the air conditioner 38 is not larger than the target power consumption in Step S302, the air conditioner feedback management unit 138a determines whether the current power consumption of the air conditioner 38 is lower than the target power consumption in Step S304.

For example, when it is determined that the current power consumption of the air conditioner 38 is lower than the target power consumption in Step S304, the air conditioner feedback management unit 138a supplies the information for controlling the set temperature of the air conditioner 38 to be a normal temperature to the control information generating unit 135 in Step S305.

In this case, in Step S306, the control information generating unit 135 generates the announce information setting the set temperature of the air conditioner 38 to the normal temperature, and supplies the generated iformation to the central management control unit 131. The central management control unit 131 controls the communication unit 312 to transmit the supplied announce information to the store 2.

In Step S282, the store control unit 31 of the store 2 allows the display unit 33 to display the announcement urging the employee to set the set temperature of the air conditioner 38 to the normal temperature.

In Step S307, the control information generating unit 135 generates the machine control information for setting the set temperature of the air conditioner 38 to the normal temperature, and supplies the generated information to the central management control unit 131. The central management control unit 3 controls the communication unit 132 to transmit the supplied machine control information setting the set temperature of the air conditioner 38 to the normal temperature to the store 2.

In Step S283, the store control unit 31 acquires the transmitted machine control information via the communication unit 32, and supplies the acquired information to the machine operating unit 35. The machine operating unit 35 operates the air conditioner 38 on the basis of the supplied machine control information so that the set temperature of the air conditioner 38 is set to the normal temperature.

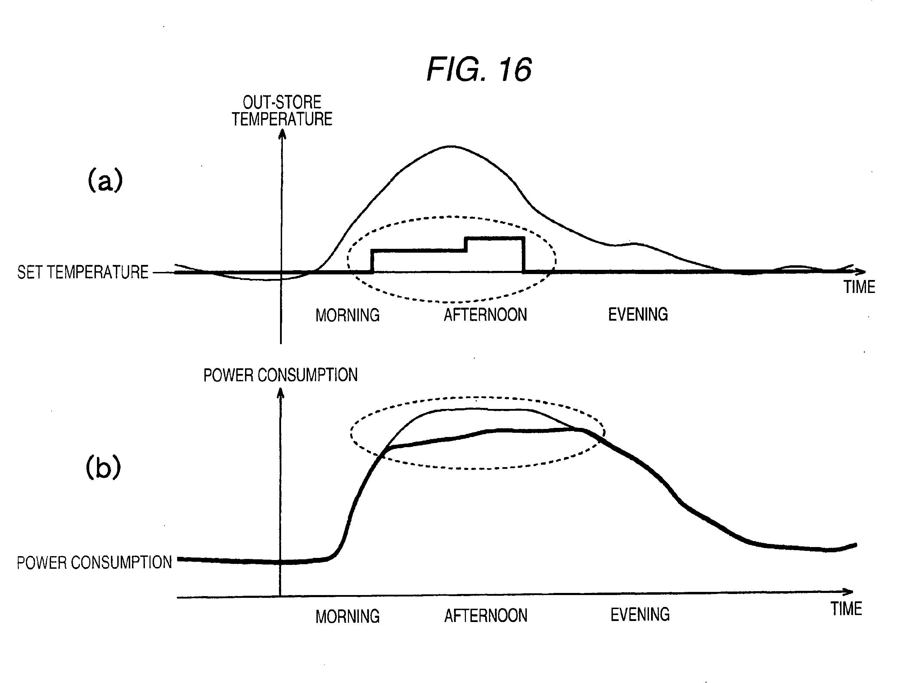

That is, when the refrigerator 37 is not managed by the above-mentioned feedback control operation, the out-store temperature is changed as shown by the thin solid line at the time of setting the set temperature to zero in the y direction in Fig. 16(a). That is, the out-store temperature is changed to be the highest temperature in the daylight. As a result, the peak of the power consumption becomes the peak of the out-store temperature as shown by the thin solid line of Fig. 16(b).

In the feedback control operation, the set temperature is set as shown by the thick line of Fig. 16 (a) and the set temperature increases when the out-store temperature is high and the power consumption increases. Since the difference between the in-store temperature and the out-store temperature is maintained, the customers from the outside store feel cool, and since the set temperature increases as shown by the thick line of Fig. 16(b), the peak of the power consumption can be lowered.

When the current power consumption is not higher than the target power consumption in Step S302, and when the current power consumption is not lower than the target power consumption in Step S304, the process in Steps S303 and S305 is skipped. In this case, since the machine control information and the announce information maintaining the operation of the air conditioner 38 are generated in Steps S306 and S307, the process in Steps S282 and S283 may be skipped substantially.

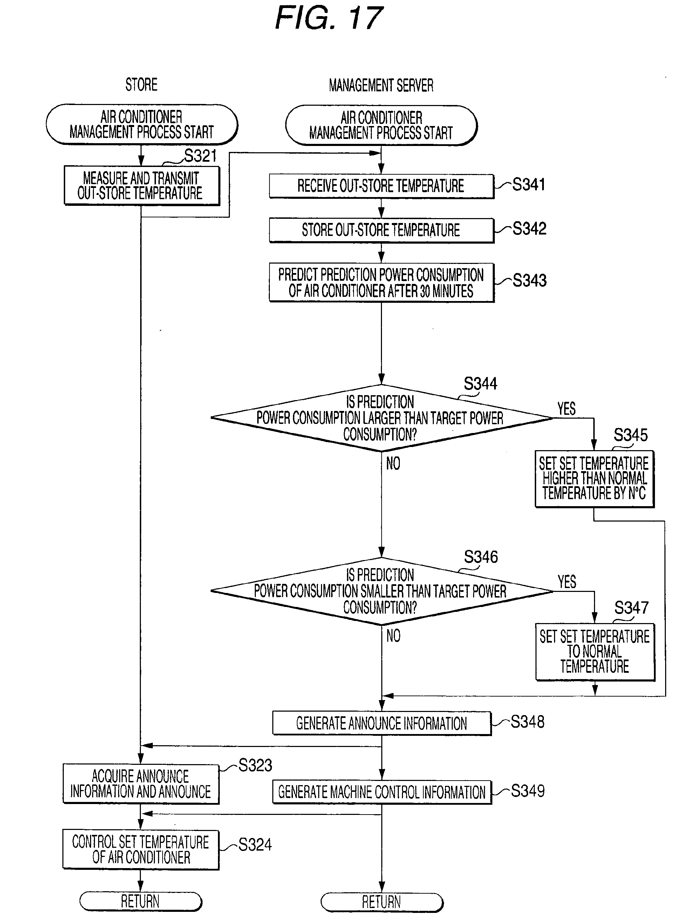

The air conditioner management process by the feedforward control operation on the basis of the power consumption will be described with reference to the flow chart of Fig. 17.

in Step S321, the out-store temperature sensor 45 measures the out-store temperature, and supplies the measured temperature to the communication unit 32. The communication unit 32 transmits the out-store temperature information supplied from the out-store temperature sensor 45 to the management center 1.

In Step S341, the communication unit 132 receives the out-store temperature information transmitted from the store 2, and supplies the received information to the out-store temperature storage unit 145.

In Step S342, the out-store temperature storage unit 145 stores the out-store temperature information transmitted from the store 2.

In Step S343, the air conditioner feedforward management unit 138b of the air conditioner management unit 138 sends an inquiry to the out-store temperature storage unit 145, and then obtains the prediction out-store temperature after 30 minutes from the out-store temperature of the past days and the average out-store temperature of the same days of the past years on the basis of the stored out-store temperature information. The air conditioner feedforward management unit 138b predicts the prediction power consumption, that corresponds to the prediction out-store temperature after 30 minutes and the set temperature, of the air conditioner 38 after 30 minutes. That is, the air conditioner feedforward management unit 138b predicts the power consumed by the air conditioner 38 after 30 minutes, from the difference between the prediction out-store temperature and the set temperature after 30 minutes.

In step S344, the air conditioner feedforward management unit 138b determines whether the prediction power consumption of the air conditioner 38 after 30 minutes is larger than the target power consumption.

For example, when it is determined that the prediction power consumption of the air conditioner 38 after 30 minutes is larger than the target power consumption in Step S344, the air conditioner feedforward management unit 138b supplies the instruction information for setting the set temperature of the air conditioner higher than the normal temperature by N°C to the control information generating unit 135.

In Step S348, the control information generating unit 135 generates the announce information increasing the set temperature of the air conditioner 38 by N°C, and supplies the generated information to the central management control unit 131. The central management control unit 131 controls the communication unit 132 to transmit the supplied announce information to the store 2.

In Step S323, the store control unit 31 of the store 2 acquires the transmitted announce information via the communication unit 32, and displays the announce information on the display unit 33. In this case, the announcement urging the employee to increase the set temperature of the air conditioner 38 by N°C is displayed on the display unit 33.

In Step S349, the control information generating unit 135 generates the machine control information for operating the air conditioner 38 so as to increase the set temperature of the air conditioner 38 by N°C, and supplies the generated information to the central management control unit 131. The central management control unit 131 controls the communication unit 132 to transmit the supplied machine control information for the air conditioner 38 to the store 2.

In Step S324, the store control unit 31 acquires the transmitted machine control information via the communication unit 32, and supplies the acquired information to the machine operating unit 35. The machine operating unit 35 operates the air conditioner 38 on the basis of the supplied machine conrol information so that the set temperature of the air conditioner 38 increases by N°C.

When it is determined that the prediction power consumption is not larger than the target power consumption in Step S344, the air conditioner feedforward management unit 138b determines whether the prediction power consumption is smaller than the target power consumption in step S346,

For example, when it is determined that the prediction power consumption is smaller than the target power consumption in Step S346, the air conditioner feedforward management unit 138b supplies the information for setting the set temperature of the air conditioner 38 to the normal temperature to the control information generating unit 135.

In this case, in Step S348, the control information generating unit 135 generates the announce information operating the air conditioner 38 so as to set the set temperature to the normal temperature, and supplies the generated information to the central management control unit 131. The central management control unit 131 controls the communication unit 132 to transmit the supplied announce information to the store 2.

In Step S323, the store control unit 31 of the store 2 allows the display unit 33 to display the announcement urging the employee to set the set temperature of the air conditioner 38 to the normal temperature.

In Step S349, the control information generating unit 135 generates the machine control information for setting the set temperature of the air conditioner 38 to the normal temperature, and supplies the generated information to the central management control unit 131. The central management control unit 131 controls the communication unit 132 to transmit the supplied machine control information setting the set temperature of the air conditioner 38 to the normal temperature to the store 2.

In Step S324, the store control unit 31 acquires the transmitted machine control information via the communication unit t 32, and supplies the acquired information to the machine operating unit 35. The machine operating unit 35 operates the air conditioner 38 on the basis of the supplied machine control information so that the set temperature of the air conditioner 38 is set to the normal temperature.

That is, in the feedforward control operation, when the prediction power consumption corresponding to the set temperature and the prediction out-store, temperature after 30 minutes is larger than the target power consumption, the difference between the out-store temperature and the set temperature of the air conditioner 38 is reduced by increasing the set temperature in time earlier by 30 minutes. Accordingly, it is possible to maintain a state in which the set temperature of the air conditioner 38 is close to the out-store temperature even when the out-store temperature increases.

That is, in the air conditioner 38, excessive loads are applied to the compressor when the difference between the set temperature and the out-store temperature is large, thus high operation efficiency that becomes a design point can not be maintained. Accordingly, by increasing the set temperature before the difference between the set temperature and the out-store temperature increases and the power consumption is larger than the target value and operating the air conditioner not to excessively increase the difference between the set temperature and the out-store temperature, it is possible to suppress the reduction in operation efficiency of the compressor of the air conditioner 38. As a result, it is possible to lower the highest point of the power consumption (it is possible to lower the power consumption than the target power consumption-), and lovier the power consumption totally.

When the prediction power consumption is not larger than the target power consumption in Step S344, and when the prediction power consumption is not smaller than the target power consumption in Step S346, the process in Steps S345 and S347 is skipped. In this case, since the machine control information and the announce information maintaining the operation of the air conditioner 38 are generated in Steps S348 and S349, the process in Steps S323 and S324 may be skipped substantially.

In this example, when it is predicted that the prediction power consumption of the air conditioner 38 predicted from the difference between the set temperature of the air conditioner 38 and the out-store temperature after 30 minutes is larger than the target power consumption, the set temperature increases by N°C in advance to operate the air conditioner 38. Accordingly, it is possible to maintain a state in which the out-store temperature is close to the set temperature. At this time, since a predetermined temperature difference between the set temperature as the in-store temperature and the out-store temperature is maintained, it is possible to maintain a state in which the customers feel cool at the time of entering the store. Additionally, by the above-mentioned process, the air conditioner 38 can be operated by suppressing the reduction in operation efficiency of the air conditioner 38, thus it is poss ible to lower the power consumption.

As in the cases of the illumination lamp management process and the refrigerator management process, any one of the above-mentioned feedback control operation and the feedforward control operation is executed as described above with reference to rig. 2. Accordingly, in a case where the out-store temperature is not stored and accurate predection power consumption is not obtained, the air conditioner management process in accordance with the feedback control operation is dominant, and in a case where the out-store temperature information is stored and accurate predection power consumption is obtained, the air conditioner management process in accordance with the feedforward control operation is dominant. When the actual out-store temperature is changed by the changes such as weather and then becomes a value away from the statistical data, the air conditioner management process in accordance with the feedback control operation becomes dominant.

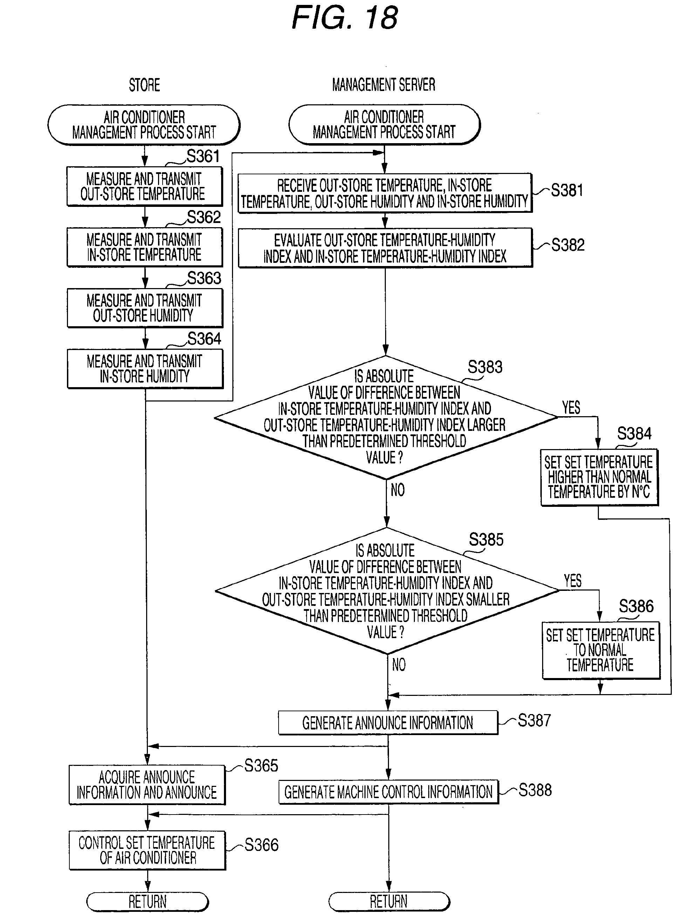

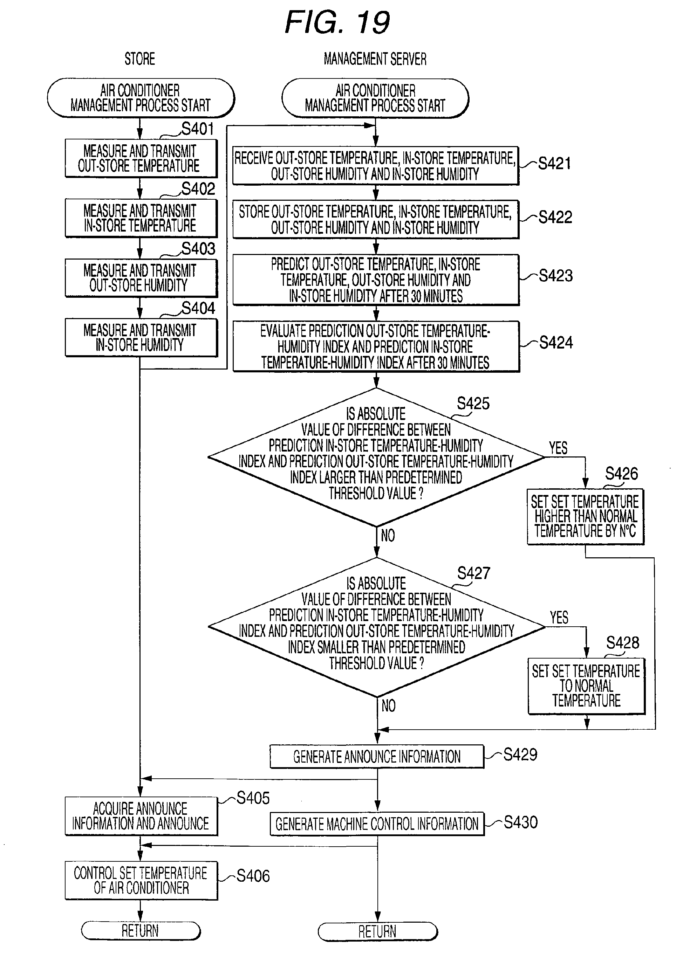

Hereinbelow, the air conditioner management process on the basis of the absolute value of the difference between the in-store temperature-humidity index and the out-store temperature-humidity index will be described with reference to the flow charts of Figs. 18 and 19. First, the air conditioner management process performed by the feedback control operation on the basis of the absolute value of the difference between the in-store temperature-humidity index and the out-store temperature-humidity index will be described with reference to the flow chart of Fig. 18. Since the process in Steps S365, S366, S384, S386 and S388 in the flow charts of Fig. 18 is the same as the process in Steps S282, S283, S303, S305 and S307 in the flow charts of Fig. 15, the explanation thereof will be omitted.

In Step S361, the out-store temperature sensor 45 measures the out-store temperature, and supplies the measured temperature to the communication unit 32. The communication, unit 32 transmits the out-store temperature information supplied from the out-store temperature sensor 45 to the management center 1.

In step S362, the in-store temperature sensor 44 measures the in-store temperature, and supplies the measured temperature to the communication unit 32. The communication unit 32 transmits the in-store temperature information supplied from the in-store temperature sensor 44 to the management center 1.

In Step S363, the out-store humidity sensor 47 measures the out-store humidity, and supplies the measured humidity to the communication unit 32. The communication unit 32 transmits the out-store humidity information supplied from the out-store humidity sensor 47 to the management center 1.

In Step S364, the in-store humidity sensor 46 measures the in-store humidity, and supplies the measured humidity to the communication unit 32. The communication unit 32 transmits the in-store humidity information supplied from the in-store humidity sensor 46 to the management center 1.

The information including the in-store temperature, the out-store temperature, the in-store humidity and the out-store humidity may be transmitted to the management center 1 respectively or simultaneously together.

In Step S381, the communication unit 132 receives the information including the in-store temperature, the out-store temperature, the in-store humidity and the out-store humidity transmitted from the store 2, and supplies the information to the in-store temperature storage unit 144, the out-store temperature storage unit 145, the in-store humidity storage unit 146 and the out-store humidity storage unit 147 respectively.

In Step S382, the air conditioner feedback management unit 138a of the air conditioner management unit 138 sends an inquiry to the in-store temperature storage unit 144, the out-store temperature storage unit 145, the in-store humidity storage unit 146 and the out-store humidity storage unit 147, and calculates the following equations (2) and (3) on the basis of the stored in-store temperature, out-store temperature, in-store humidity and out-store humidity to evaluate the in-store temperature-humidity index and the out-store temperature-humidity index.

Out-store temperature-humidity index

$$= 0.81 \times T_{out} + 0.01 \times H_{out}(0.99 \times T_{out} - 14.3) + 46.3 \quad ...(2)$$

```
In-store temperature-humidity index

= 0.81 x Tin + 0.01 x Hin(0.99 x Tin - 14.3) + 46.3  ...(3)
```

Herein, Tin is the in-store temperature, Hin is the in-store humidity. Tout is the out-store temperature, and Bout is the out-store humidity.

In Step S383, the air conditioner feedback management unit 138a determines whether the absolute value of the difference between the in-store temperature-humidity index and the out-store temperature-humidity index is larger than a predetermined threshold value. When the absolute value of the difference between the in-store temperature-humidity index and the out-store temperature-humidity index is larger than the predetermined threshold value, the process goes to Step S384, and when the absolute value of the difference between the in-store temperature-humidity index and the out-store temperature-humidity index is not larger than the predetermined threshold value, the process goes to Step S385.

In step S385, the air conditioner feedback management unit 138a determines whether the absolute value of the difference between the in-store temperature-humidity index and the out-store temperature-humidity index is smaller than a predetermined threshold value. When the absolute value of the difference between the in-store temperature-humidity index and the out-store temperature-humidity index is smaller than the predetermined threshold value, the process goes to step 3386, and when the absolute value of the difference between the in-store temperature-humidity index and the out-store temperature-humidity index is not smaller than the predetermined threshold value, the process goes to Step S387.

By the above-mentioned process, the set temperature of the air conditioner 38 is controlled so that the difference between the in-store temperature-humidity index and the out-store temperature-humidity index are maintained in a predetermined threshold value. Accordingly, the above-mentioned process shows the same effect as that of the air conditioner management process in accordance with the feedback control operation on the basis of the power consumption described with reference to the flow chart of Fig. 15. That is, the in-store temperature-humidity index and the out-store temperature-humidity index are controlled in a predetermined threshold value. For example, in a case where the out-store temperature-humidity index increases, the difference between the in-store temperature-humidity index and the out-store temperature-humidity index at the time just after the customers outside the store enter the store 2 is maintained, and a little more high set temperature of the air conditioner 38 is thereby set. However, since there is no considerable difference between the set temperature and the out-store temperature during the period when the store is cooled not to impart an unpleasant feeling, it is possible to lower the power consumption.

Hereinbelow, the air conditioner management process in accordance with the feedforward control operation on the basis of the absolute value of the difference between the in-store temperature-humidity index and the out-store temperature-humidity index will be described with reference to the flow chart of Fig. 19. Since the process in steps S401, S404 and S421 in the flow chart of Fig. 19 is the same as the process in Steps S361, S364 and S381 in the flow chart of Fig. 18 and the process in steps S405, S406, S426, S428 and S430 is the same as the process in Steps S323, S324, 5345, S347 and S349 in the flow chart of Fig. 17, the explanation thereof will be omitted.

In Step S422, the in-store temperature storage unit 144, the out-store temperature storage unit 145, the in-store humidity storage unit 146 and the cut-store humidity storage unit 147 stores the information including the in-store temperature, the out-store temperature, the in-store humidity and the out-store humidity transmitted from the store 2, respectively.

In Step S423, the air conditioner feedforward management unit 138b of the air conditioner management unit 138 sends an inquiry to the in-store temperature storage unit 144, the out-store temperature storage unit 145, the in-store humidity storage unit 146 and the out-store humidity storage unit 147, and calculates the following equations (4) and (5) by using the prediction in-store temperature, the prediction out-store temperature, the prediction in-store humidity and the prediction out-store humidity after 30 minutes, obtained on the basis of the stored in-store temperature, out-store temperature, in-store humidity and out-store humidity, to obtain the in-store temperature-humidity index and the out-store temperature-humidity index after 30 minutes from the present time.

```
Prediction out-store temperature-humidity index

= 0.81 x Tout(30) + 0.01 x Hout(30) (0.99 x Tout(30) - 14.3)

+ 46.3 …(4)
```

```
Prediction in-store temperature-humidity index

= 0.81 x Tin(30) + 0.01 x Hin(30) (0.99 x Tin(30) - 14.3) +

46.3 …(5)
```

Herein, Tin(30) is the prediction in-store temperature after 30 minutes from the present time, Hin (30) is the prediction in-store humidity after 30 minutes from the present time, Tout(30) is the prediction out-store temperature after 30 minutes from the present time and Hout (30) is the prediction out-store humidity after 30 minutes from the present time.

In Step S425, the air conditioner feedforward management unit 138b determines whether the absolute value of the difference between the prediction in-store temperature-humidity index and the prediction out-store temperature-humidity index is larger than a predetermined threshold, value. When the absolute value of the difference between the prediction in-store temperature-humidity index and the prediction out-store temperature-humidity index is larger than the predetermined threshold value, the process goes to Step S426, and when the absolute value of the difference between the prediction in-store temperature-humidity index and the prediction out-store temperature-humidity index is not larger than the predetermined threshold value, the process goes to Step S427.

In Step S427, the air conditioner feedforward management unit 138b determines whether the absolute value of the difference between the prediction in-store temperature-humidity index and the prediction cut-store temperature-humidity index is smaller than a predetermined value. When the absolute value of the difference between the prediction in-store temperature-humidity index and the prediction out-store, temperature-humidity index is smaller than the predetermined value, the process goes to Step S428, and when the absolute value of the difference between the prediction in-store temperature-humidity index and the prediction out-store temperature-humidity index is not smaller than the predetermined value, the process goes to Step S429.

By the above-mentioned process, the set temperature of the air conditioner 38 is controlled so that the difference between the prediction in-store temperature-humidity index and the prediction out-store temperature-humidity index are maintained in a predetermined threshold value. Accordingly, the above-mentioned process shows the same effect as that of the air conditioner management process in accordance with the feedback control operation on the basis of the power consumption described with reference to the flow chart of Fig. 17.

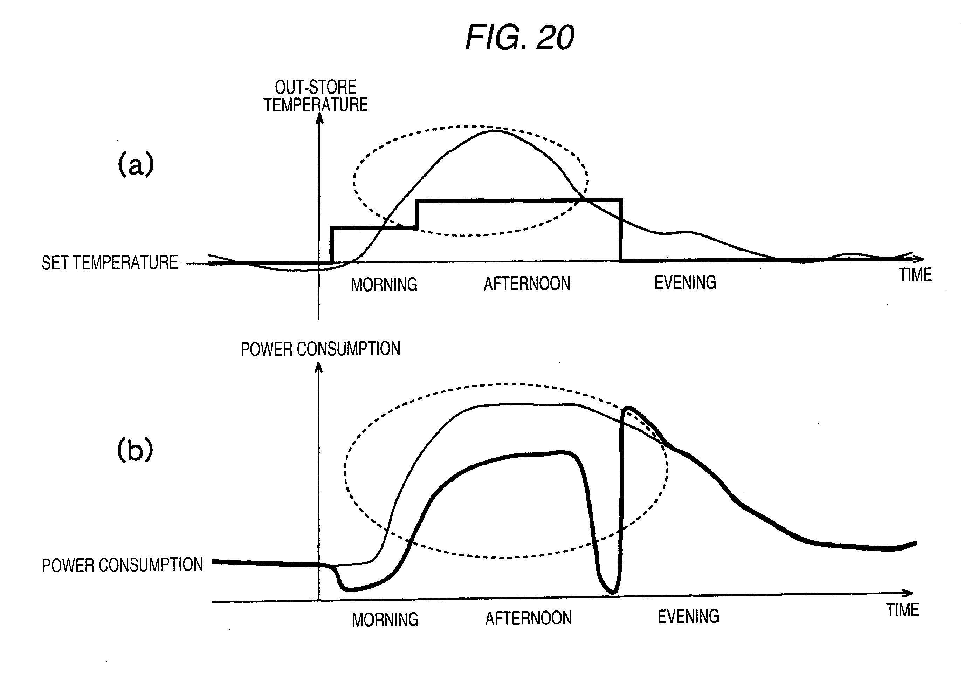

That is, in the feedforward control operation of Fig. 19, when the difference, shown by the thin solid line of Fig. 20 (a), between the prediction in-store temperature-humidity index and the prediction out-store temperature-humidity index after 30 minutes is larger than the target power consumption shown by the thin solid line of Fig. 20(b), the difference between the prediction in-store temperature-humidity index and the prediction out-store temperature-humidity index is reduced by increasing the set temperature in time earlier by 30 minutes as shown by the thick line of Fig. 20(a). Accordingly, it is possible to maintain a state in which the prediction in-store temperature-humidity index is close to the prediction out-store temperature-humidity index even when the out-store temperature increases (the portions surrounded by the dotted lines in Fig. 20).

That is, in the air conditioner 38, excessive loads are applied to the compressor when the difference between the set temperature and the out-store temperature is large, thus high operation efficiency that becomes a design point can not be maintained. Accordingly, by increasing the set temperature before the power consumption is larger than the target value, that is, before the difference between the prediction in-store temperature-humidity index and the prediction out-store temperature-humidity index is larger than a predetermined value and operating the air conditioner not to excessively increase the difference between the prediction in-store temperature-humidity index and the prediction out-store temperature-humidity index, that is, not to excessively increase the difference between the set temperature and the out-store temperature, it is possible to suppress the reduction in operation efficiency of the compressor of the air conditioner 38. As a result, as shown by the thick solid line of Fig. 20(b), it is possible to lower the highest point of the power consumption (the peak of the power consumption) (it is possible to lower the power consumption than the target power consumption.), and lower the power consumption totally.

The above-mentioned air conditioner management process has been explained on the premise that both of the air conditioner management process using the prediction in-store temperature-humidity index and the prediction out-store temperature-humidity index and the air conditioner management process using the prediction power consumption and the target power consumption can be executed and switched each other. However, it is not necessary to perform both of the air conditioner management processes and switch each other, and one of the air conditioner management process using the prediction in-store temperature-humidity index and the prediction out-store temperature-humidity index and the air conditioner management process using the prediction power consumption and the target power consumption may be executed.

As described above, it is possible to efficiently and stably manage the machines provided in the store by providing an instruction for performing appropriate countermeasures in advance in accordance with the predicted situations or controlling the operations appropriately, as well as predicting the operation situations of the machines provided in the store.

The above-mentioned series of process may be executed by hardware or software. When the series of process is executed by the software, a program constituting the software is recorded on a recording medium and installed on a computer incorporated in an exclusive hardware or on a general personal computer capable of executing a variety of functions by installing a variety of programs.

As shown in Figs, 3 and 4, in addition to the computer, the recording medium recording the program is distributed to provide the program to an user and includes a package media including program-recordable magnetic discs 71 and 121 (including a flexible disc), optical discs 72 and 122 (including CD-ROM (Compact Djsc-Read Only Memory) and DVD (Digital Versatile Disk)), magnetic optical discs 73 and 123 or semiconductor memories 74 and 124. In addition, the recording medium recording the program includes program-recordable ROM or ROM 102 of the store control unit 31, the storage unit incorporated in the store control unit 31 or the hard disc included in the storage unit 108.

In the specification, the steps describing the program recorded on the recording medium includes a process not necessarily performed in a time-series manner but performed in a parallel manner or in a individual manner, as well as a process performed in a time-series manner in accordance with the described order

In the specification, the system is an entire apparatus configured with a plurality of units.

This application claims the benefit of Japanese Patent Application No. 2005-002364, filed on January 7, 2005, the entire contents of which is hereby incorporated by reference.

**Claims**

1. A store management system comprising:

   a store control device for controlling a machine provided in a store; and
   a management server for managing the machine,

   wherein the store control device includes:

   environmental information acquiring means for acquiring environmental information of the store; and
   first transmission means for transmitting the environmental information to the management server,

   wherein the management server includes:

   second reception means for receiving the environmental information transmitted from the store control device;
   storage means for storing the environmental information;
   prediction means for predicting the environmental information after a predetermined time on the basis of the environmental information stored in the storage means;
   machine control information generating means for generating machine control information for controlling the machine on the basis of the environmental information after the predetermined time, which is predicted by the prediction means; and
   second transmission means for transmitting the machine control information to the store control device, and

   wherein the store control device further includes:

   first reception means for receiving the machine control information; and
   control means for controlling the machine on the basis of the machine control information.

2. A store control device for controlling a machine prepared in a store, the store control device comprising:

   environmental information acquiring means for acquiring environmental information of the store;
   transmission means for transmitting the environmental information to a management server;
   reception means for receiving machine control information of the machine, generated on the basis of the environmental information after a predetermined time, which is predicted by the management server; and
   control means for controlling the machine on the basis of the machine control information.

3. The store control device according to Claim 2, wherein the environmental information includes at least one of the in-store illuminance, the out-store illuminance, the refrigerator temperature, the refrigerator opening and closing frequency, the number of customers, the in-store temperature, the out-store temperature, the in-store humidity, the out-store humidity and the power consumption of the machine.

4. The store control device according to Claim 2, wherein the machine includes at least one of an illumination lamp, a refrigerator, and an air conditioner.

5. A store control method of controlling a machine provided in a store, the method comprising the steps of:

   acquiring environmental information of the store;
   transmitting the environmental information to a management server;
   receiving machine control information of the machine, generated on the basis of the environmental information after a predetermined time, which is predicted by the management server; and
   controlling the machine on the basis of the machine control information.

6. A program for allowing a computer to execute a process of controlling a store control device for controlling a machine provided in a store, the process comprising the steps of:

   acquiring environmental information of the store;
   transmitting the environmental information to a management server;
   receiving machine control information of the machine, generated on the basis of the environmental information after a predetermined time, which is predicted by the management server; and
   controlling the machine on the basis of the machine control information.

7. A management server for managing a machine provided in a store, the management server comprising:

   reception means for receiving environmental information of the store transmitted from the store;
   storage means for storing the environmental information;
   prediction means for predicting the environmental information after a predetermined time on the basis of the environmental information stored in the storage means;
   machine control information generating means for generating machine control information for controlling the machine on the basis of the environmental information after a predetermined time, which is predicted by the prediction means; and
   transmission means for transmitting the machine control information to the store.

8. The management server according to Claim 7, wherein the environmental information includes at least one of the in-store illuminance, the out-store illuminance, the refrigerator temperature, the refrigerator opening and closing frequency, the number of customers, the in-store temperature, the out-store temperature, the in-store humidity, the out-store humidity and the power consumption of the machine.

9. The management server according to Claim 7, wherein the machine includes at least one of an illumination lamp, a refrigerator, and an air conditioner.

10. The management server according to Claim 8, wherein the prediction means predicts the out-store illuminance as the environmental information after the predetermined time, on the basis of the out-store illuminance included in the environmental information stored in the storage means, and
    wherein the machine control information generating means generates the machine control information for controlling the illumination lamp included in the machine, on the basis of the out-store illuminance predicted by the prediction means.

**11.** The management server according to Claim 8, wherein the prediction means predicts the refrigerator temperature as the environmental information after the predetermined time, on the basis of the refrigerator temperature, the number of customers and the refrigerator opening and closing frequency included in the environmental information stored in the storage means, and

wherein the machine control information generating means generates the machine control information for controlling the refrigerator included in the machine, on the basis of the refrigerator temperature predicted by the prediction means.

**12.** The management server according to Claim 8, wherein the prediction means predicts the out-store temperature as the environmental information after the predetermined time, on the basis of the out-store temperature included in the environmental information stored in the storage means, and

wherein the machine control information generating means generates the machine control information for controlling the air conditioner included in the machine, on the basis of the out-store temperature predicted by the prediction means.

**13.** The management server according to Claim 8, wherein the prediction means predicts an in-store temperature-humidity index and an out-store temperature-humidity index as the environmental information after the predetermined time, on the basis of the in-store temperature, the out-store temperature, the in-store humidity and the out-store humidity included in the environmental information stored in the storage means, and

wherein the machine control information generating means generates the machine control information for controlling the air conditioner included in the machine, on the basis of the comparison result between a predetermined threshold value and an absolute value of a difference between the in-store temperature-humidity index and the out-store temperature-humidity index predicted by the prediction means.

**14.** A management method of a management server for managing a machine provided in a store, the management method comprising the steps of:

receiving environmental information of the store transmitted from the store;
storing the environmental information;
predicting the environmental information after a predetermined time on the basis of the environmental information stored in the storing step;
generating machine control information for controlling the machine on the basis of the environmental information after the predetermined time, which is predicted in the predicting step; and
transmitting the machine control information to the store.

**15.** A program for allowing a computer to execute a process of controlling a management server for managing a machine provided in a store, the operation comprising the steps of:

receiving environmental information of the store transmitted from the store;
storing the environmental information;
predicting the environmental information after a predetermined time on the basis of the environmental information stored in the storing step;
generating machine control information for controlling the machine on the basis of the environmental information after the predetermined time, predicted in the predicting step; and
transmitting the machine control information to the store.

*FIG. 1*

# FIG. 2

| STORE | MANAGEMENT SERVER | MANAGEMENT SERVER |
|---|---|---|
| STORE MANAGEMENT PROCESS START | STORE MANAGEMENT PROCESS START | STORE MANAGEMENT PROCESS START |

S1
MEASUREMENT PROCESS

S11
STORAGE PROCESS

S12
PREDICTION PROCESS

S13
DETERMINATION PROCESS

S21
DETERMINATION PROCESS

S14
ANNOUNCE INFORMATION GENERATION PROCESS

S22
ANNOUNCE INFORMATION GENERATION PROCESS

S2
ANNOUNCE PROCESS

S15
MACHINE CONTROL INFORMATION GENERATION PROCESS

S23
MACHINE CONTROL INFORMATION GENERATION PROCESS

S3
MACHINE CONTROL PROCESS

FIG. 3

EP 1 926 045 A1

# FIG. 4

EP 1 926 045 A1

## FIG. 5

MANAGEMENT SERVER — 11

136 — ILLUMINATION LAMP MANAGEMENT UNIT
136a — ILLUMINATION LAMP FEEDBACK MANAGEMENT UNIT
136b — ILLUMINATION LAMP FEEDFORWARD MANAGEMENT UNIT

137 — REFRIGERATOR MANAGEMENT UNIT
137a — REFRIGERATOR FEEDBACK MANAGEMENT UNIT
137b — REFRIGERATOR FEEDFORWARD MANAGEMENT UNIT

138 — AIR CONDITIONER MANAGEMENT UNIT
138a — AIR CONDITIONER FEEDBACK MANAGEMENT UNIT
138b — AIR CONDITIONER FEEDFORWARD MANAGEMENT UNIT

139 — IN-STORE ILLUMINANCE STORAGE UNIT
140 — OUT-STORE ILLUMINANCE STORAGE UNIT
141 — REFRIGERATOR TEMPERATURE STORAGE UNIT
142 — REFRIGERATOR OPENING AND CLOSING FREQUENCY STORAGE UNIT
143 — CUSTOMER-NUMBER STORAGE UNIT
144 — IN-STORE TEMPERATURE STORAGE UNIT
145 — OUT-STORE TEMPERATURE STORAGE UNIT
146 — IN-STORE HUMIDITY STORAGE UNIT
147 — OUT-STORE HUMIDITY STORAGE UNIT
148 — POWER CONSUMPTION STORAGE UNIT

132 — COMMUNICATION UNIT

135 — CONTROL INFORMATION GENERATING UNIT
131 — CENTRAL MANAGEMENT CONTROL UNIT
134 — OPERATION UNIT
133 — DISPLAY UNIT

EP 1 926 045 A1

# FIG. 6

```
┌─────────────────────────────────────────┐
│    STORE MANAGEMENT PROCESS START        │
└─────────────────────────────────────────┘
                    │
                    ▼
┌─────────────────────────────────────────┐
│  ILLUMINATION LAMP MANAGEMENT PROCESS    │  ─ S11
└─────────────────────────────────────────┘
                    │
                    ▼
┌─────────────────────────────────────────┐
│    REFRIGERATOR MANAGEMENT PROCESS       │  ─ S12
└─────────────────────────────────────────┘
                    │
                    ▼
┌─────────────────────────────────────────┐
│   AIR CONDITIONER MANAGEMENT PROCESS     │  ─ S13
└─────────────────────────────────────────┘
```

**FIG. 7**

STORE
ILLUMINATION LAMP MANAGEMENT PROCESS START

MANAGEMENT SERVER
ILLUMINATION LAMP MANAGEMENT PROCESS START

S101 MEASURE AND TRANSMIT IN-STORE ILLUMINANCE

S102 MEASURE AND TRANSMIT OUT-STORE ILLUMINANCE

S121 RECEIVE IN-STORE ILLUMINANCE

S122 RECEIVE OUT-STORE ILLUMINANCE

S123 IS RATE OF CHANGE OF OUT-STORE ILLUMINANCE POSITIVE? — NO / YES

S124 OUT-STORE ILLUMINANCE IS LARGER THAN 1.25 TIMES IN-STORE ILLUMINANCE? — NO / YES

S125 IN-STORE MAXIMUM ILLUMINANCE — YES / NO

S126 GENERATE INSTRUCTION INFORMATION WHICH CONTROL ILLUMINANCE TO BE THE MAXIMUM ILLUMINANCE

S127 OUT-STORE ILLUMINANCE IS SMALLER THAN 1.25 TIMES IN-STORE ILLUMINANCE? — NO / YES

S128 IN-STORE MINIMUM ILLUMINANCE — YES / NO

S129 GENERATE INSTRUCTION INFORMATION WHICH CONTROL ILLUMINANCE TO BE THE MINIMUM ILLUMINANCE

S130 GENERATE ANNOUNCE INFORMATION

S103 ACQUIRE ANNOUNCE INFORMATION AND ANNOUNCE

S131 GENERATE MACHINE CONTROL INFORMATION

S104 CONTROL ILLUMINATION LAMP

RETURN

RETURN

## FIG. 8

EP 1 926 045 A1

## FIG. 9

STORE

ILLUMINATION LAMP
MANAGEMENT PROCESS START

S151
MEASURE AND TRANSMIT
IN-STORE ILLUMINANCE

S152
MEASURE AND TRANSMIT
OUT-STORE ILLUMINANCE

MANAGEMENT SERVER

ILLUMINATION LAMP
MANAGEMENT PROCESS START

S171
RECEIVE IN-STORE ILLUMINANCE

S172
RECEIVE OUT-STORE ILLUMINANCE

S173
STORE IN-STORE ILLUMINANCE
AND OUT-STORE ILLUMINANCE

S174
OBTAIN TIME A ON STATISTICS OF STORED OUT-STORE ILLUMINANCE
CORRESPONDING TO OUT-STORE ILLUMINANCE AT THE PRESENT TIME

S175
OBTAIN DIFFERENCE D BETWEEN TIME A AND THE PRESENT TIME

S176
OBTAIN PREDICTION OUT-STORE ILLUMINANCE AFTER 30 MINUTES
FROM THE PRESENT TIME ON THE BASIS OF DIFFERENCE D

S177
IS RATE
OF CHANGE OF ILLUMINANCE
POSITIVE?
NO

YES

S178
PREDICTION
OUT-STORE ILLUMINANCE IS LARGER
THAN 1.25 TIMES IN-STORE ILLUMINANCE
AT THE PRESENT TIME?
NO

YES S179
IN-STORE MAXIMUM ILLUMINANCE
YES

NO S180
GENERATE INSTRUCTION INFORMATION WHICH CONTROL
ILLUMINANCE TO BE APPROPRIATELY HIGH ILLUMINANCE

S181
PREDICTION
OUT-STORE ILLUMINANCE
IS SMALLER THAN 1.25 TIMES IN-STORE
ILLUMINANCE AT THE PRESENT
TIME?
NO

YES
S182
IN-STORE MINIMUM ILLUMINANCE
YES

NO S183
GENERATE INSTRUCTION INFORMATION WHICH CONTROL
ILLUMINANCE TO BE APPROPRIATELY HIGH ILLUMINANCE

S153
ACQUIRE ANNOUNCE
INFORMATION AND ANNOUNCE

S184
GENERATE ANNOUNCE INFORMATION

S185
GENERATE MACHINE CONTROL INFORMATION

CONTROL ILLUMINATION LAMP

S154
RETURN

RETURN

## FIG. 10

POWER CONSUMPTION

OUTSIDE BRIGHTNESS

L−max

L−min

MORNING  AFTERNOON  EVENING  TIME

EP 1 926 045 A1

# FIG. 11

STORE

MANAGEMENT SERVER

```
( REFRIGERATOR MANAGEMENT )
(     PROCESS START        )

                S201
MEASURE AND TRANSMIT
TEMPERATURE OF REFRIGERATOR
```

```
( REFRIGERATOR MANAGEMENT )
(     PROCESS START        )

RECEIVE REFRIGERATOR TEMPERATURE INFORMATION  ── S221

                S222
        IS
    REFRIGERATOR
TEMPERATURE HIGHER THAN SET TEMPERATURE    ── YES
    OF REFRIGERATOR BY +X°C
        ?
        NO

                                    S223
                        GENERATE INSTRUCTION
                        INFORMATION SO THAT SET
                        TEMPERATURE IS CONTROLLED
                        TO BE LOWERED BY X°C

                S224
        IS
    REFRIGERATOR
TEMPERATURE HIGHER THAN SET TEMPERATURE    ── YES
    OF REFRIGERATOR BY -X°C
        ?
        NO

                                    S225
                        GENERATE INSTRUCTION
                        INFORMATION SO THAT SET
                        TEMPERATURE IS CONTROLLED
                        TO BE INCREASED BY X°C

GENERATE ANNOUNCE INFORMATION  ── S226
```

```
                S202
ACQUIRE ANNOUNCE
INFORMATION AND ANNOUNCE
```

```
GENERATE MACHINE CONTROL INFORMATION  ── S227
```

```
                S203
CONTROL SET
TEMPERATURE OF REFRIGERATOR
```

( RETURN )

( RETURN )

## FIG. 12

(a)

TEMPERATURE

SET TEMPERATURE

MORNING    AFTERNOON    EVENING

TIME

POWER CONSUMPTION

(b)

POWER CONSUMPTION

MORNING    AFTERNOON    EVENING

TIME

EP 1 926 045 A1

## FIG. 13

STORE

REFRIGERATOR MANAGEMENT
PROCESS START

↓ S241
MEASURE THE NUMBER OF
CUSTOMERS ENTERING STORE

↓ S242
MEASURE FREQUENCY OF OPENING
AND CLOSING DOOR OF REFRIGERATOR

↓ S243
MEASURE AND TRANSMIT
TEMPERATURE OF REFRIGERATOR

MANAGEMENT SERVER

REFRIGERATOR MANAGEMENT
PROCESS START

↓
RECEIVE THE NUMBER OF CUSTOMERS ENTERING STORE — S261

↓
RECEIVE FREQUENCY OF OPENING
AND CLOSING DOOR OF REFRIGERATOR — S262

↓
RECEIVE TEMPERATURE OF REFRIGERATOR — S263

↓
STORE THE NUMBER OF CUSTOMERS ENTERING
STORE AND FREQUENCY OF OPENING
AND CLOSING DOOR OF REFRIGERATOR — S264

↓
PREDICT REFRIGERATOR
TEMPERATURE AFTER 30 MINUTES — S265

↓
IS
PREDICTION REFRIGERATOR
TEMPERATURE HIGHER THAN SET TEMPERATURE
OF REFRIGERATOR BY +X°C
? — S266

→ YES → S267
GENERATE INSTRUCTION
INFORMATION SO THAT SET
TEMPERATURE IS CONTROLLED
TO BE LOWERED BY X°C

↓ NO

IS
PREDICTION REFRIGERATOR
TEMPERATURE HIGHER THAN SET TEMPERATURE
OF REFRIGERATOR BY -X°C
? — S268

→ YES → S269
GENERATE INSTRUCTION
INFORMATION SO THAT SET
TEMPERATURE IS CONTROLLED
TO BE INCREASED BY X°C

↓ NO

GENERATE ANNOUNCE INFORMATION — S270

↓

ACQUIRE ANNOUNCE
INFORMATION AND ANNOUNCE — S244

GENERATE MACHINE CONTROL INFORMATION — S271

↓

CONTROL SET
TEMPERATURE OF REFRIGERATOR — S245

↓

RETURN

RETURN

FIG. 14

(a)

TEMPERATURE

SET TEMPERATURE

MORNING    AFTERNOON    EVENING

TIME

(b)

POWER CONSUMPTION

POWER CONSUMPTION

MORNING    AFTERNOON    EVENING

TIME

EP 1 926 045 A1

# FIG. 15

STORE

MANAGEMENT SERVER

( AIR CONDITIONER
MANAGEMENT PROCESS START )

( AIR CONDITIONER
MANAGEMENT PROCESS START )

S281
MEASURE AND TRANSMIT
CURRENT POWER CONSUMPTION
OF AIR CONDITIONER

RECEIVE CURRENT POWER
CONSUMPTION OF AIR CONDITIONER — S301

S302
IS CURRENT
POWER CONSUMPTION LARGER THAN TARGET POWER
CONSUMPTION? — YES

S303
SET SET TEMPERATURE
HIGHER THAN NORMAL
TEMPERATURE BY N°C

NO

S304
IS CURRENT
POWER CONSUMPTION SMALLER THAN TARGET POWER
CONSUMPTION? — YES

S305
SET SET TEMPERATURE
TO NORMAL
TEMPERATURE

NO

GENERATE ANNOUNCE INFORMATION — S306

S282
ACQUIRE ANNOUNCE
INFORMATION AND ANNOUNCE

GENERATE MACHINE CONTROL INFORMATION — S307

CONTROL SET TEMPERATURE
OF AIR CONDITIONER — S283

( RETURN )

( RETURN )

# FIG. 16

(a)

OUT-STORE
TEMPERATURE

SET TEMPERATURE

MORNING          AFTERNOON          EVENING          TIME

(b)

POWER CONSUMPTION

POWER CONSUMPTION

MORNING          AFTERNOON          EVENING          TIME

EP 1 926 045 A1

# FIG. 17

STORE | MANAGEMENT SERVER

AIR CONDITIONER MANAGEMENT PROCESS START | AIR CONDITIONER MANAGEMENT PROCESS START

S321 — MEASURE AND TRANSMIT OUT-STORE TEMPERATURE

RECEIVE OUT-STORE TEMPERATURE — S341

STORE OUT-STORE TEMPERATURE — S342

PREDICT PREDICTION POWER CONSUMPTION OF AIR CONDITIONER AFTER 30 MINUTES — S343

S344 — IS PREDICTION POWER CONSUMPTION LARGER THAN TARGET POWER CONSUMPTION?

YES → S345 — SET SET TEMPERATURE HIGHER THAN NORMAL TEMPERATURE BY N°C

NO

S346 — IS PREDICTION POWER CONSUMPTION SMALLER THAN TARGET POWER CONSUMPTION?

YES → S347 — SET SET TEMPERATURE TO NORMAL TEMPERATURE

NO

GENERATE ANNOUNCE INFORMATION — S348

ACQUIRE ANNOUNCE INFORMATION AND ANNOUNCE — S323

GENERATE MACHINE CONTROL INFORMATION — S349

CONTROL SET TEMPERATURE OF AIR CONDITIONER — S324

RETURN | RETURN

# FIG. 18

STORE                                    MANAGEMENT SERVER

( AIR CONDITIONER
MANAGEMENT PROCESS START )        ( AIR CONDITIONER
MANAGEMENT PROCESS START )

S361
MEASURE AND TRANSMIT
OUT-STORE TEMPERATURE

S362
MEASURE AND TRANSMIT
IN-STORE TEMPERATURE

S363
MEASURE AND TRANSMIT
OUT-STORE HUMIDITY

S364
MEASURE AND TRANSMIT
IN-STORE HUMIDITY

S381
RECEIVE OUT-STORE TEMPERATURE, IN-STORE
TEMPERATURE, OUT-STORE HUMIDITY AND IN-STORE HUMIDITY

S382
EVALUATE OUT-STORE TEMPERATURE-HUMIDITY
INDEX AND IN-STORE TEMPERATURE-HUMIDITY INDEX

S383
IS ABSOLUTE
VALUE OF DIFFERENCE BETWEEN
IN-STORE TEMPERATURE-HUMIDITY INDEX AND
OUT-STORE TEMPERATURE-HUMIDITY INDEX LARGER
THAN PREDETERMINED THRESHOLD
VALUE ?

YES → S384
SET SET TEMPERATURE
HIGHER THAN NORMAL
TEMPERATURE BY N°C

NO

S385
IS ABSOLUTE
VALUE OF DIFFERENCE BETWEEN
IN-STORE TEMPERATURE-HUMIDITY INDEX AND
OUT-STORE TEMPERATURE-HUMIDITY INDEX SMALLER
THAN PREDETERMINED THRESHOLD
VALUE ?

YES → S386
SET SET TEMPERATURE
TO NORMAL
TEMPERATURE

NO

S387
GENERATE ANNOUNCE INFORMATION

S365
ACQUIRE ANNOUNCE
INFORMATION AND ANNOUNCE

S388
GENERATE MACHINE CONTROL INFORMATION

S366
CONTROL SET TEMPERATURE
OF AIR CONDITIONER

( RETURN )                        ( RETURN )

## FIG. 19

STORE          MANAGEMENT SERVER

( AIR CONDITIONER MANAGEMENT PROCESS START )    ( AIR CONDITIONER MANAGEMENT PROCESS START )

**S401**
MEASURE AND TRANSMIT OUT-STORE TEMPERATURE

**S421**
RECEIVE OUT-STORE TEMPERATURE, IN-STORE TEMPERATURE, OUT-STORE HUMIDITY AND IN-STORE HUMIDITY

**S402**
MEASURE AND TRANSMIT IN-STORE TEMPERATURE

**S422**
STORE OUT-STORE TEMPERATURE, IN-STORE TEMPERATURE, OUT-STORE HUMIDITY AND IN-STORE HUMIDITY

**S403**
MEASURE AND TRANSMIT OUT-STORE HUMIDITY

**S423**
PREDICT OUT-STORE TEMPERATURE, IN-STORE TEMPERATURE, OUT-STORE HUMIDITY AND IN-STORE HUMIDITY AFTER 30 MINUTES

**S404**
MEASURE AND TRANSMIT IN-STORE HUMIDITY

**S424**
EVALUATE PREDICTION OUT-STORE TEMPERATURE-HUMIDITY INDEX AND PREDICTION IN-STORE TEMPERATURE-HUMIDITY INDEX AFTER 30 MINUTES

**S425**
IS ABSOLUTE VALUE OF DIFFERENCE BETWEEN PREDICTION IN-STORE TEMPERATURE-HUMIDITY INDEX AND PREDICTION OUT-STORE TEMPERATURE-HUMIDITY INDEX LARGER THAN PREDETERMINED THRESHOLD VALUE ?

YES → **S426** SET SET TEMPERATURE HIGHER THAN NORMAL TEMPERATURE BY N°C

NO

**S427**
IS ABSOLUTE VALUE OF DIFFERENCE BETWEEN PREDICTION IN-STORE TEMPERATURE-HUMIDITY INDEX AND PREDICTION OUT-STORE TEMPERATURE-HUMIDITY INDEX SMALLER THAN PREDETERMINED THRESHOLD VALUE ?

YES → **S428** SET SET TEMPERATURE TO NORMAL TEMPERATURE

NO

**S429**
GENERATE ANNOUNCE INFORMATION

**S405**
ACQUIRE ANNOUNCE INFORMATION AND ANNOUNCE

**S430**
GENERATE MACHINE CONTROL INFORMATION

**S406**
CONTROL SET TEMPERATURE OF AIR CONDITIONER

( RETURN )    ( RETURN )

# FIG. 20

(a)

OUT-STORE TEMPERATURE

SET TEMPERATURE

MORNING  AFTERNOON  EVENING  TIME

(b)

POWER CONSUMPTION

POWER CONSUMPTION

MORNING  AFTERNOON  EVENING  TIME

## INTERNATIONAL SEARCH REPORT

| International application No. |
| --- |
| PCT/JP2006/300086 |

### A. CLASSIFICATION OF SUBJECT MATTER
*G06Q50/00*(2006.01), *G06Q10/00*(2006.01)

According to International Patent Classification (IPC) or to both national classification and IPC

### B. FIELDS SEARCHED

Minimum documentation searched (classification system followed by classification symbols)
*G06Q50/00*(2006.01), *G06Q10/00*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-295940 A  (Sanyo Electric Co., Ltd.), 09 October, 2002 (09.10.02), Full text; Figs. 1 to 11 & US 2002/0163431 A1   & US 2004/0186628 A1 & CN 001379300 A | 1-15 |
| X | JP 2004-325026 A  (Toshiba Corp.) 18 November, 2004 (18.11.04), Full text; Figs. 1 to 20 (Family: none) | 1-15 |
| X | JP 2001-218367 A  (Mitsubishi Electric Corp.), 10 August, 2001 (10.08.01), Full text; Figs. 1 to 12 (Family: none) | 1-15 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 04 April, 2006 (04.04.06) | Date of mailing of the international search report 11 April, 2006 (11.04.06) |
| --- | --- |
| Name and mailing address of the ISA/ Japanese Patent Office | Authorized officer |
| Facsimile No. | Telephone No. |

Form PCT/ISA/210 (second sheet) (April 2005)

**EP 1 926 045 A1**

| | INTERNATIONAL SEARCH REPORT | International application No.<br>PCT/JP2006/300086 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2001-306134 A  (Mitsubishi Electric Corp.),<br>02 November, 2001 (02.11.01),<br>Full text; Figs. 1 to 22<br>(Family: none) | 1-15 |

Form PCT/ISA/210 (continuation of second sheet) (April 2005)

48

**EP 1 926 045 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001186659 A
- JP 2005002364 A